# EUROPEAN PATENT SPECIFICATION

(11) **EP 3 533 995 B1**
(45) Date of publication and mention of the grant of the patent: **31.03.2021**
(21) Application number: 19158250.1
(22) Date of filing: 20.02.2019
(51) Int. Cl.: F02P 5/04, F02N 19/00, H02P 21/00, H02P 9/48, F02D 41/06, F02P 5/15, F02N 3/00, F02N 3/04, F02N 11/04, F02N 11/08, F02D 41/00, F02D 41/34, F02P 7/067

(54) **METHOD FOR CONTROLLING AN ENGINE UNIT FOR A STRADDLED VEHICLE, ENGINE UNIT AND STRADDLED VEHICLE**
VERFAHREN ZUR STEUERUNG EINER MOTOREINHEIT FÜR EIN GRÄTSCHSITZFAHRZEUG, MOTOREINHEIT UND GRÄTSCHSITZFAHRZEUG
PROCÉDÉ DE COMMANDE D'UNE UNITÉ DE MOTEUR POUR VÉHICULE À ENFOURCHER, UNITÉ DE MOTEUR ET VÉHICULE À ENFOURCHER

(30) Priority: 02.03.2018 JP 2018037717; 02.03.2018 JP 2018037718; 08.03.2018 JP 2018042068
(43) Date of publication of application: 04.09.2019
(73) Proprietor: YAMAHA HATSUDOKI KABUSHIKI KAISHA, Iwata-shi, Shizuoka 438-8501 (JP)
(72) Inventor: SEKIGUCHI, Junya, Iwata-shi, Shizuoka 438-8501 (JP)
(74) Representative: Grünecker Patent- und Rechtsanwälte PartG mbB

(56) References cited:
- EP-A1- 1 574 692
- EP-A1- 2 280 162
- EP-A1- 2 990 283
- WO-A1-2015/001713
- JP-A- 2010 038 017
- JP-A- 2015 143 480

## Description

The present invention relates to a method for controlling an engine unit for a straddled vehicle, an engine unit and a straddled vehicle.

Prior art document EP 1 574 692 A1 discloses an engine start control system having a function of reversely rotating a crankshaft of an engine to a predetermined position after stopping the engine for the purpose of standby for the next engine start. The engine start control system includes an injector for injecting fuel when the crankshaft reaches a predetermined angle, an ignition device for igniting the fuel with predetermined timing after fuel injection by the injector, an ACG starter functioning as a starter motor and a generator, a rotor sensor for detecting a rotor position of the ACG starter to output multiple phase signals, means for determining a rotational direction of the engine according to the phase signals output from the rotor sensor, and means for inhibiting the fuel injection when the engine is reversely rotated. In particular said prior art discloses an ECU that determines a rotor position (motor stage) based on phase output signal from the phase sensors of a rotor sensor unit, and that the ECU further determines whether the engine is in a forward rotation or in a reverse rotation. When the engine is in the reverse rotation, fuel injection and ignition is prohibited. Because the rotor sensor unit including the phase sensors is capable of detecting the rotation direction, the reverse rotation of the engine can be detected based on the outputs of the rotor sensor unit.

JP 2002-332938 A discloses a scooter type motorcycle that includes an engine starter, which, after an engine is stopped, rotates a crankshaft in reverse to a predetermined position to prepare for a subsequent engine start. The vehicle includes a starter-generator (ACG starter) that combines a starter motor and an AC generator. The vehicle has an engine automatic stop/start function (so-called idle stop function), by which the engine is automatically stopped when the vehicle is stopped and the ACG starter is automatically driven to rotate forward to restart the engine when a start operation is performed thereafter. After the engine is started, the ACG starter functions as a generator. When the engine stops, a swing back operation is performed in which the ACG starter is driven to rotate in reverse to rotate the crankshaft in reverse to a position before a compression top dead center in regard to a reverse rotation direction. When the engine is restarted and the forward rotation drive of the ACG starter is begun, the rotation of the crankshaft is sufficiently accelerated in a run-up period up to the compression top dead center and an inertia torque of a rotating system, including the crankshaft, is thereby increased. Use of the inertia torque of the rotating system in addition to the driving torque of the ACG starter is thus enabled. Obtaining of a torque necessary for rotating the crankshaft past the compression top dead center is thereby enabled even if the driving torque of the ACG starter is small. Making of the ACG starter compact is thus enabled.

The ACG starter of JP 2002-332938 A includes rotor angle sensors, provided in one-to-one correspondence to each of a U phase, a V phase, and a W phase, and each rotor angle sensor is constituted of a Hall IC or a magnetoresistive (MR) sensor. Energization control of supplying currents to the respective U, V, and W phases of stator coils is performed based on a rotational position of the rotor detected by the rotor angle sensor. Further, the rotor angle sensors are used to determine a rotational position (stage) of a crankshaft. Using this determination, the crankshaft is rotated in reverse to the predetermined position in the swing back operation.

On the other hand, JP 2010-38017 A discloses an engine that includes an arrangement that detects a rotational position of a crankshaft by counting crank pulses generated by a crank angle sensor. Using the rotational position thus detected, a stroke of a four-stroke engine is identified. JP 2010-38017 A further discloses asynchronous injection of injecting a fuel from an injector without waiting for completion of stroke identification when the engine is started by a kick operation. More specifically, when a defined number (for example, two to three) crank pulses are input, an average pulse interval of the crank pulses is calculated, and if the average pulse interval is not more than a threshold, the injector injects the fuel. Startability of the engine is improved by such asynchronous injection.

A crank angle sensor, arranged to generate crank pulses, may specifically be arranged by an electromagnetic pickup. The electromagnetic pickup is located to face a detection region through which detection bodies, arranged on a rotor at intervals along a rotation direction, pass successively in accompaniment with a rotation of the rotor. The electromagnetic pickup generates detection signals by electromagnetic induction due to passing of detection bodies through the detection region. Crank pulses are obtained by waveform shaping of the detection signals.

It has been considered a straddled vehicle engine having an arrangement in which a rotational position of a rotor, coupled to a crankshaft, is detected using an electromagnetic pickup and a starter/generator is controlled based on the detected rotational position. This is because a rotor angle sensor, such as disclosed in JP 2002-332938 A, is expensive and hinders cost reduction.

On the other hand, a starter/generator, used in common as a starter motor and a generator, is not allowed to become large, mainly due to a small installation space in a straddled vehicle. It is therefore difficult to make a large driving torque be generated while securing the required power generation capability. It is therefore effective, for a reliable start, to perform a swing back operation such as described in JP 2002-332938 A. Further, to improve startability, asynchronous injection, such as described in JP 2010-38017 A is effective.

However, with the arrangement of JP 2010-38017 A, the asynchronous injection is performed by the injector being actuated by input of a number of crank pulses and therefore there is a possibility of the asynchronous injection being executed in response to crank pulses generated during the swing back. There is thus a possibility of the injected fuel flowing in reverse through an intake pipe when an intake valve opens (in an intake stroke) during a swing back period. There is a possibility, for example, of an air cleaner becoming contaminated with the fuel thereby.

It is the object of the present invention to provide a method for controlling an engine unit for a straddled vehicle, an engine unit and a straddled vehicle capable of improving startability with an inexpensive arrangement.

According to the present invention said object is solved by a method for controlling an engine unit for a straddled vehicle having the features of independent claim 1. Moreover, said object is also solved by an engine unit according to claim 13. Moreover, said object is also solved by a straddled vehicle according to claim 16. Preferred embodiments are laid down in the dependent claims.

A preferred embodiment provides an engine unit included in a straddled vehicle. The engine unit includes a four-stroke engine, having a cylinder, a crankshaft, and a fuel injector, a rotating electrical machine, an electromagnetic pickup, and a controller. The rotating electrical machine is power-transmittably coupled to the crankshaft. The rotating electrical machine is used in common as a starter motor for rotating the crankshaft and as a generator for generating electric power by a rotating force of the crankshaft. The rotating electrical machine includes a rotor that rotates together with the rotation of the crankshaft and a stator that faces the rotor. The electromagnetic pickup has a detection region in a region through which a plurality of detected portions, arranged on the rotor at intervals in a rotation direction of the rotor, pass. The electromagnetic pickup generates detection signals in accompaniment with passage of detected portions through the detection region. The controller has a combustion controller for controlling a combustion operation of the engine and a rotating electrical machine controller for controlling the rotating electrical machine using the detection signals generated by the electromagnetic pickup. The controller executes a position specifying processing of specifying a position of the crankshaft using the detection signals generated by the electromagnetic pickup. Also, the controller executes an idle stop control of stopping combustion by the engine to enter an idle stop state when an idle stop condition is established. The controller executes, when a restart condition is established in the idle stop state, a restart control of driving the crankshaft in a forward rotation direction by the rotating electrical machine and actuating the fuel injector to restart the engine. The controller executes, after the engine is put in the idle stop state and before beginning the drive of the crankshaft in the forward rotation direction, a swing back control of driving the crankshaft in a reverse rotation direction by causing the rotating electrical machine to rotate the crankshaft in reverse to a predetermined swing back position. The controller executes, in the restart control, a start asynchronous injection control of making the fuel injector perform asynchronous injection after beginning the drive of the crankshaft in the forward rotation direction by the rotating electrical machine.

Due to there being limited installation space in the straddled vehicle, the rotating electrical machine that is used in common as the starter motor and the generator is required to be arranged as compactly as possible. Due to this requirement, it is not possible for a driving torque when the rotating electrical machine is used as the starter motor to be made very large. A swing back operation is thus performed between a point at which the engine is put in the idle stop state and a point at which it is restarted subsequently. Sufficient acceleration of the crankshaft rotation from the swing back position until a compression top dead center position is reached is thus enabled when the engine is restarted. Passing of the compression top dead center is thereby enabled using both an inertia torque of a rotating system, including the crankshaft, and the driving torque, generated by the rotating electrical machine, thus enabling the engine to be started while using the rotating electrical machine that is compact.

On the other hand, if the restart condition is established during the idle stop, the crankshaft is driven in the forward rotation direction by the rotating electrical machine. When the drive in the forward rotation direction is begun, the asynchronous injection is performed. By a fuel being injected without waiting for a stroke identification, the engine is enabled to generate an initial explosion when the compression top dead center position arrives for the first time thereafter. Smooth engine start is thereby enabled.

Moreover, the asynchronous injection is performed on condition of the rotating electrical machine beginning the drive of the crankshaft in the forward rotation direction and therefore the asynchronous injection would not be executed during the swing back operation. This therefore enables reverse flow of the fuel through an intake path of the engine to be avoided.

With the present preferred embodiment, rotation information of the rotor of the rotating electrical machine, that is, position information of the crankshaft is acquired using the electromagnetic pickup, and therefore the arrangement is inexpensive in comparison to a case of using a position sensor, such as a Hall IC. On the other hand, with just the detection signals of the electromagnetic pickup, it is not possible to identify the rotation direction of the crankshaft, and therefore, with asynchronous injection, based on just the detection signals of the electromagnetic pickup, there is a possibility of the fuel being injected in the swing back as well. This problem is solved by the arrangement described above.

The present preferred embodiment thus enables providing of the straddled vehicle engine unit that is capable of improving startability with an inexpensive arrangement.

The controller may perform the swing back control when the engine stops. Preferably, the swing back control is performed not just when the engine is stopped by the idle stop control but also when the engine is stopped by a cause other than the idle stop control. A specific example of a cause other than the idle stop control is an off operation of a main switch by a user.

Alternatively, when the restart condition is satisfied, the controller may perform the swing back control before the rotating electrical machine begins to drive the crankshaft in the forward rotation direction by the restart control.

In a preferred embodiment, the controller executes, in the start asynchronous injection control, a forward rotation identification of identifying a beginning of rotation of the crankshaft in the forward rotation direction. The controller makes the fuel injector perform the asynchronous injection on condition of the beginning of rotation of the crankshaft in the forward rotation direction being identified by the forward rotation identification.

With this arrangement, the asynchronous injection is performed on condition of the beginning of rotation of the crankshaft in the forward rotation direction being identified, therefore enabling execution of the asynchronous injection in the swing back operation to be avoided reliably. This therefore enables the reverse flow of the fuel through the intake path of the engine to be avoided more reliably. Further, even in an unlikely event where rotation of a short period of the crankshaft in the reverse rotation direction occurs due to the energization of the rotating electrical machine, the asynchronous injection would not be executed. The reverse flow of the fuel through the intake path of the engine is therefore avoided reliably.

The identification of whether or not the rotation of the crankshaft in the forward rotation direction has begun may be made, for example, by using a relationship of a mode of drive control of the rotating electrical machine in the forward rotation direction and a timing of the detection signals generated by the electromagnetic pickup.

In a preferred embodiment, the engine includes a spark plug that ignites the fuel inside the cylinder. In the start asynchronous injection control, the controller makes the fuel injector perform the asynchronous injection before the compression top dead center position that comes first after the rotating electrical machine begins to drive the crankshaft in the forward rotation direction. The restart control includes an initial explosion ignition control of making the spark plug generate a spark discharge at an initial explosion ignition position set in a vicinity of the first compression top dead center position after the rotating electrical machine begins to drive the crankshaft in the forward rotation direction.

With this arrangement, when the drive of the crankshaft in the forward rotation direction is begun in the restart control, the fuel is supplied by the asynchronous injection and thereafter, the fuel is ignited at the first compression top dead center position by the spark discharge of the spark plug. This enables the initial explosion to be attained at the first compression top dead center position.

The initial explosion ignition position may be the same position as an ordinary ignition position applied after the start of the engine is completed.

In a preferred embodiment, the plurality of detected portions are arranged such that the electromagnetic pickup generates a reference detection signal at a predetermined reference crank position. The swing back position is determined, for example, such that a top dead center, following the reference crank position that comes first when the crankshaft is rotated in the forward rotation direction from the swing back position, is the compression top dead center. In the position specifying processing, the controller specifies the initial explosion ignition position using the detection signals generated by the electromagnetic pickup.

With this arrangement, when the crankshaft is rotated in the forward rotation direction from the swing back position, the electromagnetic pickup generates the reference detection signal at the reference crank position. Position specifying based on the reference crank position and the detection signals of the electromagnetic pickup is thereby enabled. Specifying of the initial explosion ignition position in the vicinity of the compression top dead center based on the detection signals of the electromagnetic pickup is thus enabled thereafter. Then, when arrival of the initial explosion ignition position is detected based on the detection signals of the electromagnetic pickup, the spark plug generates the spark discharge. The asynchronous injection is executed by the rotating electrical machine beginning to drive the crankshaft in the forward rotation direction, and therefore completion of the asynchronous injection before the initial explosion ignition position is reached from the swing back position is enabled. This therefore enables the initial explosion to be attained at the first compression top dead center position by the spark plug generating the spark discharge at the initial explosion ignition position.

In a preferred embodiment, in the start asynchronous injection control, the controller makes the fuel injector perform the asynchronous injection with the detection signal, generated by the electromagnetic pickup immediately after the drive of the crankshaft in the forward rotation direction by the rotating electrical machine begins, used as a trigger. This arrangement enables the asynchronous injection to be performed to prepare for the initial explosion promptly when the drive of the crankshaft in the forward rotation direction is begun.

The swing back position is preferably a position before an ordinary injection position (injection position applied in synchronous injection) that is applied after the start of the engine is completed. Fuel injection at an appropriate timing is thereby enabled even in the case of the asynchronous injection. The swing back position is preferably a position immediately prior to the injection position applied in the synchronous injection. Preferably, the immediately prior position is specifically a position such that the electromagnetic pickup generates the detection signal for the first time at the injection position when the crankshaft is rotated in the forward rotation direction from the immediately prior position (swing back position). This enables the asynchronous injection to be performed at the injection position applied in the synchronous injection.

In a preferred embodiment, the engine unit further includes an inverter, including a plurality of switching devices for controlling a current flowing between a battery, which is installed in the straddled vehicle, and the rotating electrical machine. The rotating electrical machine controller controls the switching devices using the detection signals generated by the electromagnetic pickup.

This arrangement enables the current flowing between the rotating electrical machine and the battery to be controlled by controlling the switching devices of the inverter without using an expensive position sensor, such as a Hall IC. That is, turning on/off of a current path is enabled using the detection signals of the electromagnetic pickup to drive the rotating electrical machine to use it as a starter motor or to use the rotating electrical machine as a generator.

In a preferred embodiment, the controller executes, in the start asynchronous injection control, a forward rotation identification of identifying a beginning of rotation of the crankshaft in the forward rotation direction. The controller makes the fuel injector perform the asynchronous injection on condition of the beginning of rotation of the crankshaft in the forward rotation direction being identified by the forward rotation identification. The forward rotation identification includes a forward synchronous rotation determination of determining, based on the control of the switching devices by the rotating electrical machine controller and the detection signals generated by the electromagnetic pickup, whether or not timings of the control of the switching devices and the detection signals are matched.

This arrangement enables whether or not the rotation of the crankshaft in the forward rotation direction has begun to be identified while using the electromagnetic pickup, which does not generate information related to the rotor rotation direction. This enables the execution of the asynchronous injection to be avoided when the crankshaft is rotating in the reverse rotation direction and the reverse flow of the fuel in the intake path to be avoided.

In a preferred embodiment, the controller executes a stroke identification of identifying the stroke of the engine. The controller executes a synchronous injection control of making the fuel injector perform synchronous injection based on a result of the stroke identification. The controller executes the start asynchronous injection control before the result of the stroke identification is obtained.

This arrangement enables the engine to be started promptly in the restart from the idle stop state because the fuel is supplied to the engine by the asynchronous injection before the stroke identification is made. After the start, the fuel is supplied at an appropriate timing by the synchronous injection based on the stroke identification result.

In a preferred embodiment, the controller determines a fuel injection amount in the asynchronous injection based on a rule differing from that of a fuel injection amount in the synchronous injection. This enables the fuel injection amounts respectively adapted to a state of the engine in the restart from the idle stop state and a state of the engine after the start to be determined based on separate rules. This enables startability in restart to be improved and enables the fuel of necessary and sufficient amount to be supplied to the engine during running.

In a preferred embodiment, the controller, in an ordinary start of starting the engine from a stop state other than the idle stop state, does not execute the start asynchronous injection control and makes the fuel be injected from the fuel injector by the synchronous injection control.

In the ordinary start, startability of a level such as that in the restart from the idle stop state, is not required. The asynchronous injection thus does not have to be performed.

Also, in the case where the controller performs the swing back control even when the running of the engine is stopped by a cause other than the idle stop control, there is a possibility that the crankshaft position is moved from the swing back position before the ordinary start. That is, in the case of the restart from the idle stop state, an elapsed time from the engine stop is short and the crankshaft may thus be considered to be positioned at or in a vicinity of the swing back position. On the other hand, a typical case where the engine is stopped by a cause other than the idle stop control is a case where the user interrupts use of the engine unit (that is, use of the straddled vehicle). There is thus a high possibility that the engine is put in a running stop state over a long time. Thus, in the ordinary start, a long time may have elapsed from when the running of the engine is previously stopped and there is thus a possibility of the position of the crankshaft position being changed from the swing back position in the meantime. Therefore, it is not necessarily appropriate to perform the asynchronous injection in the ordinary start.

In a preferred embodiment, the plurality of detected portions are arranged such that the electromagnetic pickup generates a reference detection signal at a predetermined reference crank position. The swing back position is determined, for example, such that a top dead center position, following the reference crank position that comes first when the crankshaft is rotated in the forward rotation direction from the swing back position, is the compression top dead center position. In the stroke identification, the controller identifies the stroke of the engine based on the reference detection signal that is first generated by the electromagnetic pickup after the rotating electrical machine begins the drive of the crankshaft in the forward rotation direction by the restart control.

With this arrangement, when the crankshaft is rotated in the forward rotation direction by the rotating electrical machine in the restart control, the crankshaft reaches the compression top dead center position from the swing back position and through the reference crank position. That is, when the electromagnetic pickup generates the reference detection signal at the reference crank position, the next top dead center position is not an exhaust top dead center position but is the compression top dead center position. The swing back position is determined such that such a relationship holds. Identification of the stroke is thus enabled by monitoring the reference detection signal first generated by the electromagnetic pickup when the rotation of the crankshaft in the forward rotation direction is begun by the restart control.

In a preferred embodiment, in the start asynchronous injection control, the controller makes the fuel injector perform the asynchronous injection on condition of establishment of a start asynchronous injection execution condition. The start asynchronous injection execution condition preferably includes one or more among a battery voltage condition related to a voltage of a battery included in the straddled vehicle and connected to the rotating electrical machine, an engine temperature condition which is a condition related to a temperature of the engine, and an asynchronous injection frequency limit condition which is a condition related to a limit of the number of times of the asynchronous injection.

The battery voltage condition may be that the battery voltage is not less than a threshold. When the battery voltage is low, there is concern of not being able to control the position of the crankshaft accurately to the swing back position by the swing back control, and it is thus preferable to avoid asynchronous injection.

The engine temperature condition preferably includes that the temperature of the engine is not less than a lower limit temperature. If the temperature of the engine is low, the fuel injected by the asynchronous injection may not vaporize appropriately and combustion failure may occur. The engine temperature condition may include that the temperature of the engine is not more than an upper limit temperature. This is because, if the temperature of the engine is high, auto-ignition may occur before ignition in a compression stroke.

The asynchronous injection frequency limit condition may be a condition that limits the number of times of asynchronous injection to an upper limit frequency (for example, once). There is a possibility of asynchronous injection being repeated if the stroke identification takes time. In this case, the fuel may be supplied excessively and spark plug wetting may occur. It is therefore appropriate to limit the asynchronous injection frequency.

In a preferred embodiment, the swing back control includes a reverse rotation identification of identifying the rotation of the crankshaft in the reverse rotation direction. If the rotation of the crankshaft in the reverse rotation direction is not identified by the reverse rotation identification, the controller interrupts the swing back control.

With this arrangement, if the crankshaft does not rotate in the reverse rotation direction even when the swing back operation is attempted, the swing back control is interrupted. This enables excessive electric power consumption caused by the swing back control to be avoided and enables electric power to be left for a subsequent start.

In a preferred embodiment, the reverse rotation identification includes a desynchronization determination of the rotating electrical machine using the detection signals generated by the electromagnetic pickup. This arrangement enables the desynchronization determination of the rotating electrical machine to be made using the detection signals generated by the electromagnetic pickup and the desynchronization determination to be used for the reverse rotation identification. This therefore enables the reverse rotation identification of the rotating electrical machine to be performed without having to include an expensive rotational position sensor.

In a preferred embodiment, the engine is a single-cylinder, four-stroke engine, having one cylinder. With the single-cylinder, four-stroke engine, variation of a load torque during cranking is large and the load torque becomes highest in the vicinity of the compression top dead center position. Thus, by performing the swing back operation, performing of cranking past the compression top dead center is enabled even with a low-power rotating electrical machine. In addition, in the restart from the idle stop state, the asynchronous injection is performed, thus enabling improvement of startability of the single-cylinder, four-stroke engine.

In a preferred embodiment, the engine unit further includes a fuel pump for supplying the fuel to the fuel injector. When the restart condition is established, the controller begins drive of the fuel pump without waiting for the beginning of rotation of the crankshaft.

With this arrangement, when the restart condition is established, the drive of the fuel pump is begun promptly. Preparation for the asynchronous injection is thereby enabled. The fuel of sufficient pressure is thus supplied to the fuel injector when the asynchronous injection is performed, thus enabling the fuel to be injected reliably. This enables the startability to be improved.

A preferred embodiment provides a straddled vehicle that includes a straddled vehicle engine unit having features such as described above. The straddled vehicle includes a wheel to which the rotation of the crankshaft is transmitted. Also, the straddled vehicle includes a straddled seat. This arrangement enables realization of the straddled vehicle that includes the engine unit, which is improved in startability by an inexpensive arrangement.

The above and other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a side view of an outline of a straddled vehicle.
FIG. 2 is a schematic partial sectional view of the general arrangement of an engine unit included in the straddled vehicle.
FIG. 3 is a sectional view of a rotating electrical machine included in the engine unit.
FIG. 4 is a block diagram of the electrical configuration of the straddled vehicle that includes the engine unit.
FIG. 5 is a flowchart for describing an example of control processing from an engine start to an engine stop.
FIG. 6 is a flowchart for describing an example of a swing back control.
FIG. 7 is a flowchart for describing an example of control processing accompanying a restart from an idle stop state.
FIG. 8A is a diagram for describing an example of operations in an ordinary start.
FIG. 8B is a diagram for describing the example of operations in the ordinary start and illustrates operations subsequent to the operations of FIG. 8A.
FIG. 9 is a diagram for describing an example of operations in the restart from the idle stop state.

### DETAILED DESCRIPTION OF THE PREFERRED EMBODIMENTS

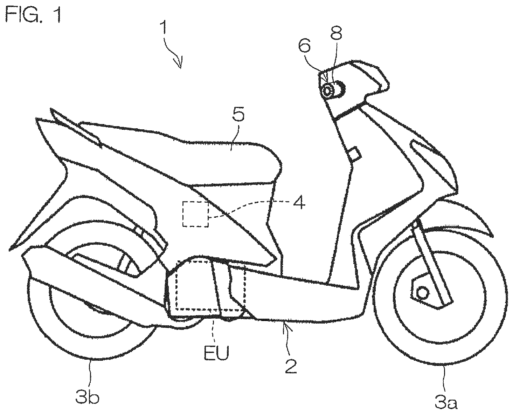

FIG. 1 is a side view of an outline of a straddled vehicle. The straddled vehicle 1 includes an engine unit EU, a body 2, wheels 3a and 3b, a battery 4, and a straddled type seat 5. The engine unit EU, the battery 4, and the seat 5 are supported by the body 2. The wheels 3a and 3b are rotatably supported respectively at a front portion and a rear portion of the body 2. The engine unit EU drives the wheel 3b (the rear wheel in the present preferred embodiment), which is a drive wheel, and makes the wheel 3b rotate to make the straddled vehicle 1 travel. The wheel 3a (front wheel) is a driven wheel in the present preferred embodiment. A handlebar 6, pivotable to the right and left, is supported by the front portion of the body 2. The wheel 3a pivots to the right and left in accordance with the pivoting of the handlebar 6. An accelerator operating member 8 (accelerator grip) is located at one end, the right end in the present preferred embodiment, of the handlebar 6. The accelerator operating member 8 is pivotally operably mounted to an end portion of the handlebar 6. The accelerator operating member 8 is an example of a throttle operating member that is operated by a user to operate a throttle of the engine unit EU.

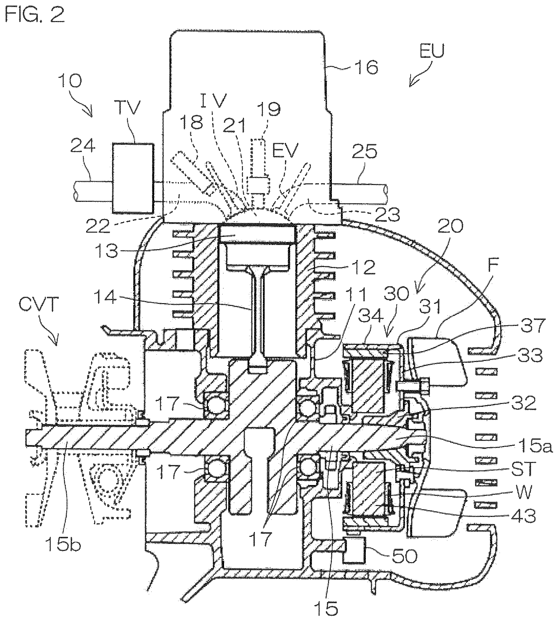

FIG. 2 is a schematic partial sectional view of the general arrangement of the engine unit EU. The engine unit EU is a four-stroke engine unit for vehicle and more specifically is an engine unit installable on the straddled vehicle 1.

The engine unit EU includes a four-stroke, single-cylinder engine 10 and a rotating electrical machine 20. The four-stroke, single-cylinder engine 10 (hereinafter referred to as the "engine 10") is a single-cylinder, four-stroke engine having one cylinder.

The engine 10 includes a crankcase 11, a cylinder 12, a piston 13, a connecting rod 14, and a crankshaft 15.

The piston 13 is provided to be freely reciprocally movable inside the cylinder 12. The crankshaft 15 is provided to be rotatable inside the crankcase 11. The connecting rod 14 connects the piston 13 and the crankshaft 15 and transmits a reciprocating motion of the piston 13 to the crankshaft 15. The crankshaft 15 is freely rotatably supported by the crankcase 11 through a pair of bearings 17.

The rotating electrical machine 20 is mounted to one end portion 15a of the crankshaft 15. The rotating electrical machine 20 is thereby power-transmittably coupled to the crankshaft 15. A transmission CVT is mounted to another end portion 15b of the crankshaft 15. The transmission CVT changes a shift ratio, which is a ratio of an output rotational speed with respect to an input rotational speed.

A cylinder head 16 is mounted to an upper portion of the cylinder 12. A combustion chamber 21 is defined by the cylinder 12, the cylinder head 16, and the piston 13. The cylinder head 16 is provided with an intake valve IV, a fuel injector 18, a spark plug 19, and an exhaust valve EV. An intake passage 22 and an exhaust passage 23 that are in communication with the combustion chamber 21 are formed in the cylinder head 16. The intake valve IV opens and closes the intake passage 22 and the exhaust valve EV opens and closes the exhaust passage 23.

The fuel injector 18 injects a fuel to supply the fuel into the combustion chamber 21. The intake valve IV controls inflow of air into the combustion chamber 21. The intake valve IV and the exhaust valve EV open and close in accordance with a position of the crankshaft 15. By being put in an opened state, the intake valve IV supplies air containing the fuel to the combustion chamber 21. The spark plug 19 is located to face the combustion chamber 21 and generates a spark discharge inside the combustion chamber 21 to ignite a gaseous mixture of the air and the fuel introduced into the combustion chamber 21. By being put in an opened state, the exhaust valve EV discharges exhaust after combustion from the cylinder 12 to an exhaust pipe 25.

A throttle valve TV is located at an intake pipe 24 connected to the intake passage 22. The throttle valve TV adjusts an amount of the air supplied to the combustion chamber 21. An opening degree of the throttle valve TV is adjusted in accordance with the operation of the accelerator operating member 8 (see FIG. 1).

Once each of an intake stroke, a compression stroke, an expansion stroke, and an exhaust stroke are included in one combustion cycle of the engine 10. In the intake stroke, the intake valve IV is opened and the piston 13 moves toward a bottom dead center. In the meantime, the fuel injector 18 injects the fuel. The gaseous mixture of the air and the fuel is thereby sucked into the combustion chamber 21. In the compression stroke, the piston 13 moves toward a top dead center (compression top dead center) in a state where the intake valve IV is closed and the gaseous mixture inside the combustion chamber 21 is thereby compressed. The spark plug 19 performs spark discharge when the piston 13 is in a vicinity of the compression top dead center position. The gaseous mixture is thereby ignited and expands, causing the expansion stroke of moving the piston 13 toward the bottom dead center. In the exhaust stroke, the exhaust valve EV is opened, the piston 13 moves toward the top dead center (exhaust top dead center), and the exhaust gas is thereby discharged to the exhaust pipe 25.

The engine 10 outputs a rotating force through the crankshaft 15. The rotating force of the crankshaft 15 is transmitted through the transmission CVT to the wheel 3b (see FIG. 1). The straddled vehicle 1 (see FIG. 1) is driven by the wheel 3b that receives the rotating force, output from the engine 10, through the crankshaft 15.

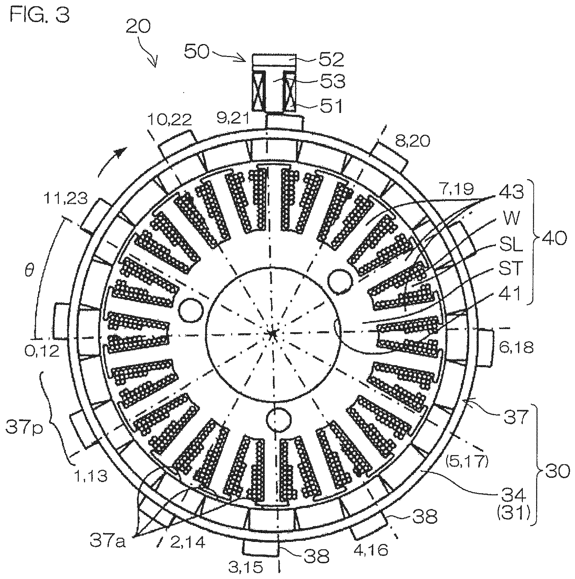

FIG. 3 is a sectional view showing a section perpendicular to a rotational axis of the rotating electrical machine 20 shown in FIG. 2. The rotating electrical machine 20 is a permanent magnet type rotating electrical machine and more specifically is a permanent magnet type three-phase brushless generator. Further, the rotating electrical machine 20 also functions as a permanent magnet type three-phase brushless motor.

The rotating electrical machine 20 has a rotor 30 and a stator 40. The rotating electrical machine 20 is of a radial gap type in the present preferred embodiment. Also, in the present preferred embodiment, the rotating electrical machine 20 is of an outer rotor type. That is, the rotor 30 is an outer rotor and the stator 40 is an inner stator.

As illustrated in FIG. 2 and FIG. 3, the rotor 30 has a rotor main body portion 31. The rotor main body portion 31 is constituted, for example, of a ferromagnetic material. The rotor main body portion 31 is arranged to have a bottomed cylindrical shape. The rotor main body portion 31 has a cylindrical boss portion 32, a disk-shaped bottom wall portion 33, and a cylindrical back yoke portion 34. The bottom wall portion 33 and the back yoke portion 34 are formed integrally. The bottom wall portion 33 and the back yoke portion 34 are fixed to the crankshaft 15 through the cylindrical boss portion 32. The rotor 30 thus rotates together with the crankshaft 15. The rotor 30 is not provided with a winding supplied with an electric current. The bottom wall portion 33 is provided with a cooling fan F.

The rotor 30 has a permanent magnet portion 37. The rotor 30 has a plurality of magnetic pole portions 37a. In the present preferred embodiment, the plurality of magnetic pole portions 37a are formed of the permanent magnet portion 37. The plurality of magnetic pole portions 37a are provided at an inner periphery of the back yoke portion 34. In the present preferred embodiment, the permanent magnet portion 37 has a plurality of permanent magnets. The plurality of magnetic pole portions 37a are respectively provided at the plurality of permanent magnets. The permanent magnet portion 37 may however be formed of one annular permanent magnet instead. In this case, the one permanent magnet is magnetized such that the plurality of magnetic pole portions 37a are aligned along an inner peripheral surface.

The plurality of magnetic pole portions 37a are provided such that N poles and S poles are located alternately on the inner peripheral surface along a peripheral direction of the rotor 30 (more specifically, the back yoke portion 34). Magnetic pole portions 37a that are mutually adjacent in the peripheral direction form a magnetic pole portion pair 37p. In the present preferred embodiment, the number of magnetic poles of the rotor 30 facing the stator 40 is 24. Twelve magnetic pole portion pairs 37p are thus provided. The number of magnetic poles of the rotor 30 refers to the number of magnetic poles facing the stator 40. The permanent magnet of the rotor 30 and the stator 40 face each other across an air gap. The magnetic pole portions 37a are provided at an outer side of the stator 40 in a radial direction of the rotating electrical machine 20. The back yoke portion 34 is provided at outer sides of the magnetic pole portion 37a in the radial direction. The rotating electrical machine 20 has the magnetic pole portions 37a of a larger number than teeth 43 of the stator 40.

The stator 40 has a stator core ST and a plurality of stator windings W. The stator core ST has a plurality of the teeth 43 provided radially at intervals (equal intervals in the present preferred embodiment) in the peripheral direction. The plurality of teeth 43 extend integrally from the stator core ST toward a radially outer side. In the present preferred embodiment, a total of eighteen teeth 43 are provided at intervals in the peripheral direction. Slots SL are formed between adjacent teeth 43. The stator core ST thus has a total of eighteen slots SL formed at intervals in the peripheral direction. As mentioned above, the rotor 30 has the magnetic pole portions 37a of the larger number than the teeth 43. The number of the magnetic pole portions 37a is 4/3 of the number of slots.

The stator windings W are wound around peripheries of the respective teeth 43. That is, the stator windings W of a plurality phases are provided such as to pass through the slots SL. A state where the stator windings W are inside the slots SL is shown in FIG. 3. Each of the stator windings W of the plurality of phases is a winding of any of a U phase, a V phase, and a W phase. The stator windings W are located, for example, such as to be aligned in the order of the U phase, the V phase, and the W phase in the peripheral direction.

A plurality (eleven in the present preferred embodiment) of detected portions 38, for detection of a rotational position of the rotor 30, are provided on an outer surface of the rotor 30. The plurality of detected portions 38 are detected by a magnetic action. The plurality of detected portions 38 are provided on the outer surface of the rotor 30 at intervals in the peripheral direction. The detected portions 38 are formed of a ferromagnetic material.

Numbers "0" to "23," respectively allocated to positions of the eleven detected portions 38 and an omitted position, at which a detected portion 38 is not provided, are shown in FIG. 3. The numbers are allocated for one combustion cycle of the engine 10, that is, for two rotations of the rotor 30, and each expresses a position of the crankshaft 15 in one combustion cycle. Specifically, each of the numbers "0" to "11" expresses a position of the crankshaft 15 in the first rotation and each of the numbers "12" to "23" expresses a position of the crankshaft 15 during the second rotation.

An electromagnetic pickup 50 is used as a rotor position detector that detects the rotational position of the rotor 30. The electromagnetic pickup 50 is provided at a position facing the plurality of detected portions 38. The electromagnetic pickup 50 includes a pickup coil 51 that magnetically detects each detected portion 38. The electromagnetic pickup 50 further includes a detecting magnet 52 and a core 53. When the detected portion 38 of the number "0" passes through a position facing the electromagnetic pickup 50, the crankshaft 15 is at the compression top dead center or a position in a vicinity of the compression top dead center. When the detected portion 38 of the number "12" passes through the position facing the electromagnetic pickup 50, the crankshaft 15 is at the exhaust top dead center or a position in a vicinity of the exhaust top dead center.

The rotating electrical machine 20 is coupled to the crankshaft 15 of the engine 10. Specifically, the rotor 30 is coupled to the crankshaft 15 such as to rotate at a fixed speed ratio with respect to the crankshaft 15.

In the present preferred embodiment, the rotor 30 is mounted to the crankshaft 15 without interposition of a power transmission mechanism (for example, a belt, chain, gear, speed reducer, speed increaser, etc.). The rotor 30 rotates at a speed ratio of 1:1 with respect to the crankshaft 15. The rotating electrical machine 20 is arranged such that the rotor 30 rotates in a forward rotation direction during combustion operation of the engine 10.

In an engine start, the rotating electrical machine 20 functions as a starter motor that rotates the crankshaft 15 in the forward rotation direction to start the engine 10. When the engine 10 performs the combustion operation, the rotating electrical machine 20 functions as a generator that is driven by the engine 10 to generate electric power. That is, the rotating electrical machine 20 has both a function of rotating the crankshaft 15 in the forward rotation direction to start the engine 10 and a function of being driven by the engine 10 to generate electric power when the engine 10 performs the combustion operation.

The rotating electrical machine 20 is driven by a battery 4 (see FIG. 1), included in the straddled vehicle 1, to apply a force for rotation to the crankshaft 15. More specifically, the rotating electrical machine 20 is able to rotatingly drive the crankshaft 15 in the forward rotation direction and rotatingly drive it in a reverse rotation direction. Further, the rotating electrical machine 20 is also enabled to be driven by the battery 4 to apply a force in a direction reverse to the rotation direction of the crankshaft 15, that is, to apply a braking force.

The plurality of detected portions 38 are aligned at intervals along the rotation direction of the rotor 30 on the outer surface of the rotor 30. The electromagnetic pickup 50 has a detection region at the position of successively facing the plurality of detected portions 38 in accompaniment with the rotation of the rotor 30. That is, the electromagnetic pickup 50 is located to face the detection region into which the plurality of detected portions 38 enter successively during the rotation of the rotor 30.

To describe further specifically, the detected portions 38 are provided on the rotor 30 at angular intervals, each of 30 degrees. Alternate long and short dashed lines in FIG. 3 indicate the angular intervals at which the detected portions 38 are provided. Mutually adjacent detected portions 38 are located with respect to each other at the angular interval forming a measurement angle θ. In the present preferred embodiment, the measurement angle θ is 30 degrees.

The electromagnetic pickup 50 detects one of the plurality of detected portions 38 each time the rotor 30 rotates by the measurement angle θ. The electromagnetic pickup 50 outputs a detection signal each time it detects a detected portion 38. More accurately, by a detected portion 38 moving past the detection region, an electromotive force is generated in the pickup coil 51 due to electromagnetic induction, and a detection signal is generated thereby. That is, the electromagnetic pickup 50 outputs the detection signals upon detecting the movement of the detection portions 38 passing through the detection region.

In the present preferred embodiment, each detected portion 38 corresponds to one magnetic pole portion pair 37p. The plurality of detected portions 38 have the same relative positional relationship with respect to the respectively corresponding magnetic pole portion pairs 37p.

In the present preferred embodiment, the eleven detected portions 38 are provided on the rotor 30. The eleven detected portions 38 are respectively provided on the rotor 30 at eleven of the twelve positions located on the rotor 30 at intervals of the measurement angle θ. Specifically, the detected portions 38 are located at the eleven locations of the numbers "0" to "4" and "6" to "11" (or "12" to "16" and "18" to "23"). The number "5" (or "17") expresses the omitted position at which a detected portion 38 is not located.

The plurality of detected portions 38 are positioned at equal intervals or at practically equal intervals in a peripheral direction of the crankshaft 15. An angular interval 2θ, between the two detected portions 38 located at the two positions (the two positions of the numbers "4" and "6" or the two positions of the numbers "16" and "18") that are mutually adjacent in the peripheral direction across the omitted position (the number "5" or "17"), is twice the measurement angle θ. Detection of a reference position (reference crank position) in one rotation of the crankshaft 15 is enabled because one of the plurality of intervals formed by the plurality of detected portions 38 differs thus from the other intervals. A detection signal, generated by the electromagnetic pickup 50 in correspondence to the reference position, that is, the omitted position that is assigned the number "5" and "17," is a reference detection signal.

In the description that follows, a rotational position of the crankshaft 15 (crank position) may in some cases be expressed using the number of a detected portion 38. For example, when a position "9" is mentioned, it refers to the rotational position of the crankshaft 15 in a state where the detected portion 38 of the number "9" is detected by the electromagnetic pickup 50 (see FIG. 3).

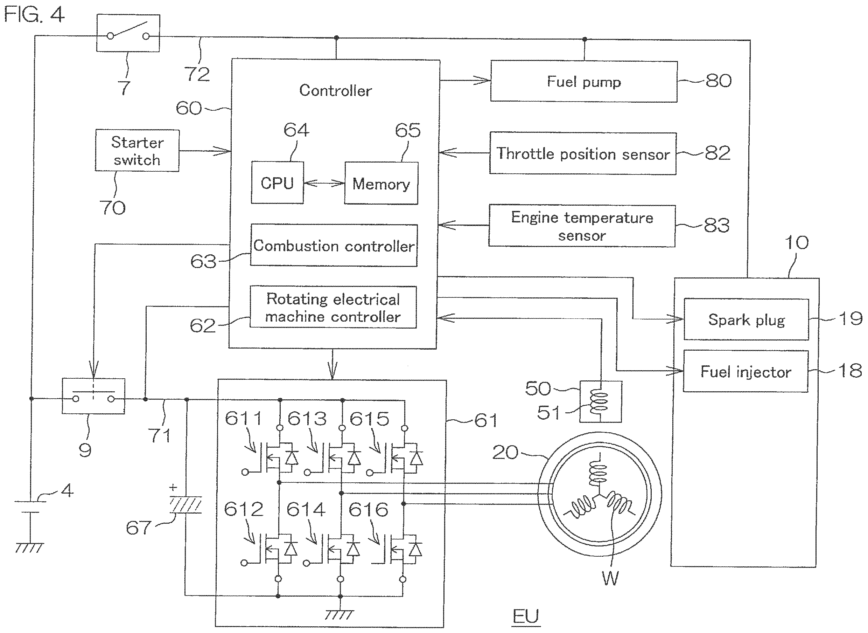

FIG. 4 is a block diagram of the general electrical configuration of the straddled vehicle 1 that includes the engine unit EU. The engine unit EU is provided with a controller 60 and an inverter 61. The controller 60 controls respective portions of the straddled vehicle 1, including the inverter 61.

The rotating electrical machine 20 and the battery 4 are connected to the inverter 61. When the rotating electrical machine 20 functions as the generator, the electric power generated by the rotating electrical machine 20 is supplied to the battery 4 through the inverter 61 and through a power supply line 71. The battery 4 is thereby charged by the electric power generated by the rotating electrical machine 20. When the rotating electrical machine 20 is used as the starter motor, the battery 4 supplies electric power to the rotating electrical machine 20 from the power supply line 71 and through the inverter 61. A main relay 9 is interposed in the power supply line 71. The battery 4 is thus connected to the inverter 61 through the main relay 9. The main relay 9 is opened and closed by the controller 60.

The inverter 61 includes a plurality (for example, six) of switching devices 611 to 616. The switching devices 611 to 616 constitute a three-phase bridge inverter. The stator windings W are connected to the switching devices 611 to 616. The plurality of switching devices 611 to 616 are connected to the respective phases of the stator windings W of the plurality of phases. In more detail, of the plurality of switching devices 611 to 616, two switching devices that are connected in series constitute a half bridge. The half bridges of the respective phases are connected in parallel with respect to the battery 4. The switching devices 611 to 616 constituting the half bridges of the respective phases are respectively connected to the respective phases of the stator windings W of the plurality of phases. Each of the switching devices 611 to 616 is, for example, a transistor and, in more detail, is an FET (field effect transistor) or an IGBT (insulated gate bipolar transistor), etc.

The switching devices 611 to 616 control passing and interruption of current between the stator windings W of the plurality of phases and the battery 4.

When the rotating electrical machine 20 functions as the motor, respective energization and stop of energization of the stator windings W of the plurality of phases are switched by on/off of the switching devices 611 to 616.

When the rotating electrical machine 20 functions as the generator, switching between passing and interruption of current between each of the stator windings W and the battery 4 is performed by on/off operations of the switching devices 611 to 616. Rectification and voltage control of the three-phase AC output from the rotating electrical machine 20 are performed by successively switching on/off the switching devices 611 to 616. The switching devices 611 to 616 thus control the current output from the rotating electrical machine 20 to the battery 4 and electric components.

In such a power generation operation, a capacitor 67 connected to the power supply line 71 smoothens the voltage led out to the power supply line 71 when the rotating electrical machine 20 performs the power generation operation.

The controller 60 is connected to and controls the fuel injector 18 and the spark plug 19, which are the electric components included in the engine 10. Also, the controller 60 is connected to and controls operation of a fuel pump 80. The fuel pump 80 supplies fuel from an unillustrated fuel tank to the fuel injector 18.

Also, the electromagnetic pickup 50 is connected to and the detection signals generated by the electromagnetic pickup 50 are input into the controller 60. Further, a throttle position sensor 82 and an engine temperature sensor 83 are connected to and detection signals of the throttle position sensor 82 and the engine temperature sensor 83 are input into the controller 60. The throttle position sensor 82 detects a valve position, that is, the throttle opening of the throttle valve TV. The throttle valve TV is operated by the accelerator operating member 8 and therefore the throttle position sensor 82 is able to detect the operation of the accelerator operating member 8. The engine temperature sensor 83 detects a temperature of the engine 10 as an engine temperature. The engine temperature sensor 83 is located in a vicinity of the engine 10. If the engine 10 is a water-cooled engine, the engine temperature sensor 83 may detect a temperature of cooling water as an alternate index of an engine temperature.

Further, a starter switch 70, operated by the user in starting the engine 10, is connected to the controller 60. Upon detecting operation of the starter switch 70, the controller 60 executes a start cranking control that includes drive of the rotating electrical machine 20.

The electric power of the battery 4 is supplied through a power supply line 72 to the controller 60 and further supplied to the electric components, such as the fuel pump 80, the fuel injector 18, the spark plug 19, etc. A main switch 7 is interposed in the power supply line 72. The main switch 7 is a switch that is operated to be conducting by the user in beginning use of the straddled vehicle 1 and operated to be interrupted by the user in ending the use of the straddled vehicle 1.

When the main switch 7 is made conducting, the controller 60, the fuel pump 80, the fuel injector 18, the spark plug 19, etc., are connected to the battery 4 and made operable. Also, if, when the main switch 7 is conducting, the main relay 9 is also conducting, the electric power generated by the rotating electrical machine 20 is suppliable through the power supply lines 71 and 72 to the controller 60, the fuel pump 80, the fuel injector 18, the spark plug 19, etc.

The controller 60 is further connected, between the main relay 9 and the inverter 61, to the power supply line 71. Therefore, even when the main relay 9 is interrupted, the controller 60 is able to receive the electric power generated by the rotating electrical machine 20. When supplied with electric power and operable, the controller 60 controls the opening and closing of the main relay 9.

The controller 60 includes a rotating electrical machine controller 62 and a combustion controller 63.

The combustion controller 63 of the controller 60 controls the engine 10. The rotating electrical machine controller 62 controls the rotating electrical machine 20. Specifically, the rotating electrical machine controller 62 controls the inverter 61. The rotating electrical machine controller 62 thereby controls drive operation and power generation operation of the rotating electrical machine 20.

The combustion controller 63 controls the combustion operation of the engine 10. By controlling the combustion operation of the engine 10, the combustion controller 63 controls the output of the engine 10. More specifically, the combustion controller 63 controls the spark plug 19 and the fuel injector 18.

The rotating electrical machine controller 62 controls the current flowing between the battery 4 and the rotating electrical machine 20 through the power supply line 71 by controlling the plurality of switching devices 611 to 616 included in the inverter 61. The rotating electrical machine controller 62 controls the respective on/off operations of the switching devices 611 to 616 to control the operation of the rotating electrical machine 20.

The controller 60 is arranged by a computer having a processor (CPU) 64 and a memory 65 (storage device). The memory 65 stores data related to programs and calculations. The CPU 64 performs calculation processing based on a control program and data stored in the memory 65. Functions of the rotating electrical machine controller 62 and the combustion controller 63 are realized by the CPU 64 executing the control program. Respective operations by the rotating electrical machine controller 62 and the combustion controller 63 are thus specifically, operations of the controller 60 having the form of the computer.

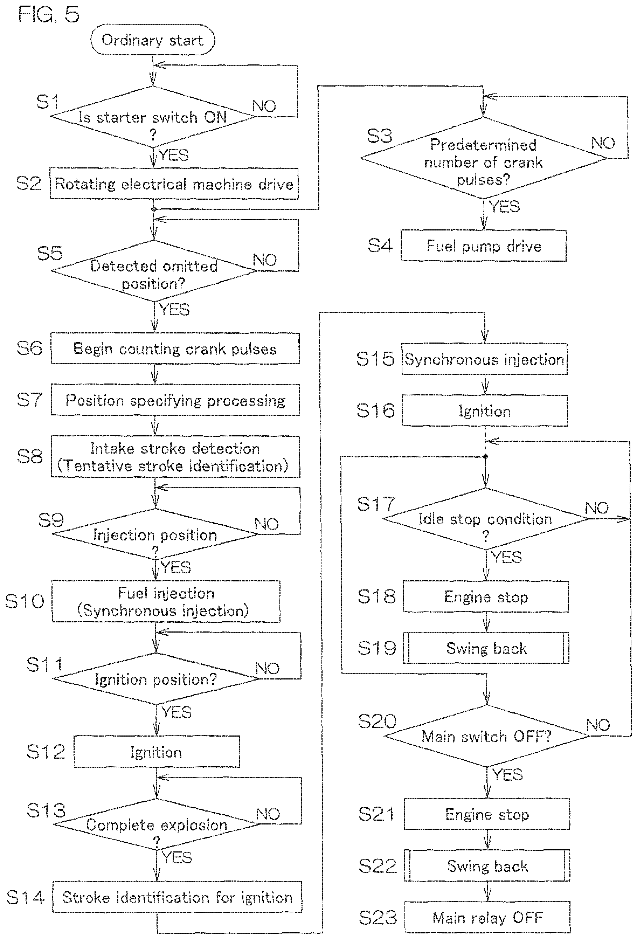

FIG. 5 is a flowchart for describing an example of processing by the controller 60 from the engine start to an engine stop. When use of the straddled vehicle 1 is to begin, the user turns on the main switch 7. Electric power is thereby supplied from the battery 4 to the controller 60 and the controller 60 begins processing. The controller 60 makes the main relay 9 conducting to connect the battery 4 and the inverter 61.

The user further operates the starter switch 70 to begin running of the engine 10 (step S1: YES). In response, the controller 60 starts a control for driving the rotating electrical machine 20 in the forward rotation direction (step S2). That is, the controller 60 controls the switching devices 611 to 616 of the inverter 61 to make electric power be supplied from the battery 4 to the rotating electrical machine 20. Rotation of the crankshaft 15 is thereby begun.

When the rotation of the crankshaft 15 begins, the detection signals are generated from the electromagnetic pickup 50. The controller 60 performs waveform shaping of the detection signals to obtain crank pulses. The controller 60 performs on/off control of the switching devices 611 to 616 at a timing defined based on the crank pulses and thereby performs brushless drive control of the rotating electrical machine 20.

When a predetermined number (for example, two or three) of the crank pulses are generated (step S3: YES), the controller 60 begins drive of the fuel pump 80 (step S4) and prepares for start of the engine 10.

Meanwhile, the controller 60 monitors the crank pulses and judges whether or not the omitted position (the number "5" or "17") has arrived (step S5). When the omitted position arrives (step S5: YES), the controller 60 begins counting of the crank pulses (step S6). A position specifying processing of specifying the rotational position of the crankshaft 15 based on a count value of the crank pulses with the omitted position as a reference is then performed (step S7). Thereafter, the controller 60 constantly performs the counting of the crank pulses and the position specifying processing based on the count value.

Further, the controller 60 monitors an engine speed based on intervals of the crank pulses and detects the intake stroke based on variation of the engine speed (step S8; tentative stroke identification based on intake stroke detection). Once the intake stroke is detected, stroke identification is enabled thereafter based on the rotational position of the crankshaft 15. That is, distinguishing among the positions "0" to "11" and among the positions "12" to "23" is enabled. The controller 60 waits for the rotational position of the crankshaft 15 to become an injection position (for example, the position "8") and, when the injection position is reached (step S9: YES), makes the fuel be injected from the fuel injector 18 (step S10). Further, the controller 60 waits for the rotational position of the crankshaft 15 to become an ignition position and, when an ignition position is reached (step S11: YES), makes the spark plug 19 perform spark discharge to ignite the gaseous mixture inside the combustion chamber 21 (step S12). Ignition positions are set to positions (for example, the positions "0" and "12") in the vicinity of a top dead center position. The ignition positions (for example, the positions "0" and "12") may be matched with the top dead center positions or may be positions shifted by minute angles from the top dead center positions.

Thereafter, the controller 60 monitors the engine speed based on the intervals of the crank pulses and, when the engine speed reaches a complete explosion engine speed (step S13: YES), performs stroke identification for ignition (step S14). The stroke identification for ignition includes, for example, a stroke identification based on variation of the engine speed in one combustion cycle. Before the stroke identification for ignition, spark discharge of the spark plug 19 is performed once in one rotation and ignition is performed twice in one combustion cycle. Specifically, two positions (for example, the positions "0" and "12") in a vicinity of the compression top dead center position and a vicinity of the exhaust top dead center position are deemed to be ignition positions and the spark plug 19 performs spark discharge at the two ignition positions. After the stroke identification for ignition, the spark plug 19 performs spark discharge once in one combustion cycle, that is, at the ignition position (for example, the position "0") in the vicinity of the compression top dead center position.

After completion of the stroke identification for ignition, the twenty four rotational positions "0" to "23," by which two rotations of the crankshaft 15 are divided into 30 degrees each, are identified accurately by the counting of the crank pulses, the fuel injection at the injection position (step S15; synchronous injection control) and the ignition at the ignition position (step S16) are repeated, and the combustion by the engine 10 is continued.

When the engine 10 is started, the controller 60 executes an idle stop control. That is, when an idle stop condition is satisfied by the straddled vehicle 1 stopping for traffic light waiting, etc. (step S17: YES), the controller 60 interrupts the fuel injection control and the ignition control and stops the combustion by the engine 10 (step S18). This state is an idle stop state.

The idle stop condition may be that all of the following conditions A1 to A4 continue for a predetermined duration (for example, three seconds).
A1: The throttle opening degree is a fully-closed opening degree.
A2: The vehicle speed is not more than a predetermined value (for example, 3 km/h).
A3: The engine speed is in an idling engine speed range (for example, not more than 2500 rpm).
A4: The engine temperature is not less than a predetermined value (for example, 60°C).

When the rotation of the crankshaft 15 stops, the controller 60 executes a swing back control (step S19).

If, instead of the idle stop, the user turns off the main switch 7 (step S20: YES), the controller 60 further interrupts the fuel injection control and the ignition control and stops the combustion by the engine 10 (step S21). In this case, even after the main switch 7 is turned off, the controller 60 keeps the main relay 9 in the on state to keep the connection with the battery 4 and performs control for stopping the engine 10 (step S21). Further, when the rotation of the crankshaft 15 stops, the controller 60 executes the swing back control (step S22). After this swing back control (step S22), the controller 60 turns off the main relay 9 (step S23) and interrupts the connection with the battery 4.

In stopping the engine 10, the controller 60 may perform a brake control to stop the rotation of the crankshaft 15 immediately. The brake control is a control of controlling the switching devices 611 to 616 of the inverter 61 to make the rotating electrical machine 20 generate a torque that is opposite the rotation direction of the crankshaft 15. After the rotation of the crankshaft 15 is stopped and before the swing back control (step S19 or S21) is performed, the controller 60 may energize the stator windings W for a fixed time to perform a stop position control. The stop position control is a control for accurately bringing the position of the crankshaft 15 to any position among the twelve rotational positions "0" to "11" (or "12" to "23").

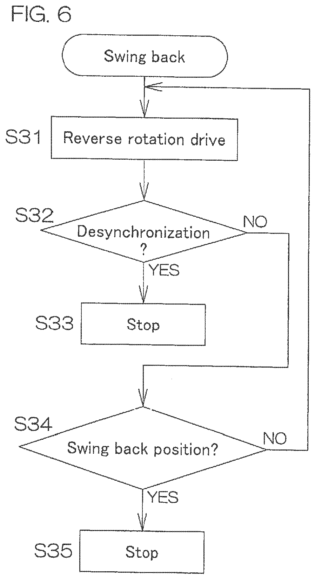

FIG. 6 is a flowchart for describing an example of the swing back control (steps S19, S22 in FIG. 5). The controller 60 drives the switching devices 611 to 616 of the inverter 61 in a reverse rotation pattern to drive the rotating electrical machine 20 in the reverse rotation direction (step S31). Thereby, the crankshaft 15 begins to rotate in the reverse rotation direction.

The controller 60 executes a reverse rotation identification of identifying the rotation of the crankshaft 15 in the reverse rotation direction. When the battery 4 is low in voltage, the rotation of the crankshaft 15 may not follow and may become desynchronized even if phase currents are applied to the stator windings W through the inverter 61. The controller 60 thus executes the reverse rotation identification. More specifically, the controller 60 determines whether or not desynchronization (loss of synchronism or out of step) is occurring (step S32). For example, if the electromagnetic pickup 50 does not generate the detection signal for not less than a predetermined time, that is, if a crank pulse is not generated for not less than the predetermined time, the controller 60 may judge that desynchronization is occurring. If desynchronization occurs (step S32: YES), the controller 60 stops the drive control of the rotating electrical machine 20 (step S33) and interrupts swing back.

If it is judged that desynchronization is not occurring (step S32: NO), that is, if it is judged that the crankshaft 15 is rotating, the controller 60 judges whether or not the position of the crankshaft 15 is a predetermined swing back position (for example, the position "7") (step S34). The position of the crankshaft 15 is obtained by the position specifying processing of counting the crank pulses (counting such that the count value is decreased when the rotation is in the reverse rotation direction). The rotating electrical machine 20 is driven to rotate in reverse until the position of the crankshaft 15 reaches the swing back position and when the swing back position is reached (step S34: YES), the drive of the rotating electrical machine 20 is stopped (step S35).

The swing back position is preferably set to be before (before in the reverse rotation direction) the immediately prior compression top dead center position. Preferably, after the crankshaft is rotated in reverse to the swing back position, the stop position control described above is performed. The stop position control enables the position of the crankshaft 15 to be brought accurately to any position among the twelve rotational positions "0" to "11" (or "12" to "23") and, in many cases, enables control to the swing back position.

The electromagnetic pickup 50 uses the electromagnetic induction that accompanies the movement of the detected portions 38 and therefore, immediately prior to rotation stop of the crankshaft 15, the detection signal may not be generated and there is a possibility of loss of accurate position information. The position of the crankshaft 15 recognized by the controller 60 at engine stop (step S18 or S21) and the position of the crankshaft 15 recognized by the controller 60 at swing back operation stop (step S35) may thus contain error. However, the swing back operation does not require so much accuracy and there is no problem even if the position of the crankshaft 15 after the swing back is slightly deviated from the swing back position (target position).

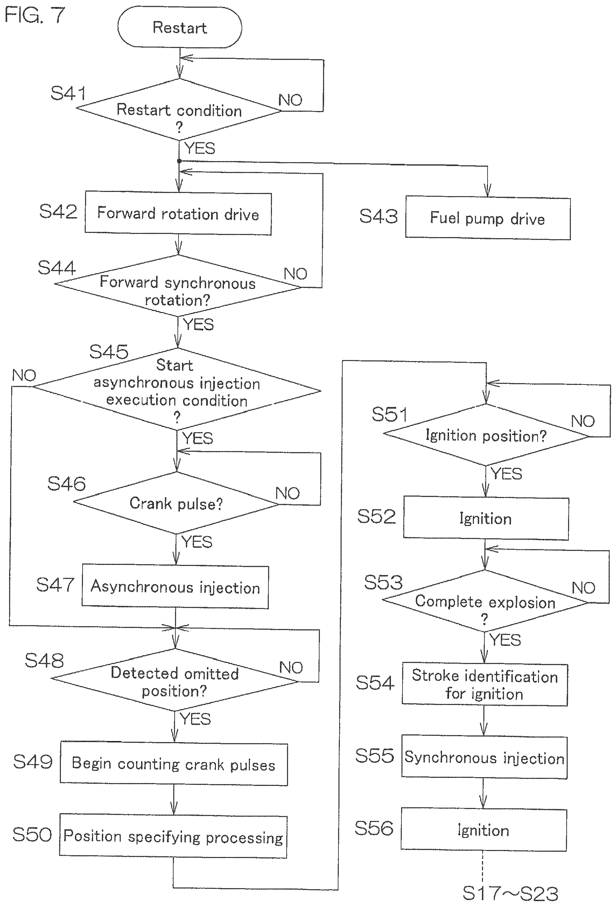

FIG. 7 is a flowchart for describing an example of processing by the controller 60 accompanying a restart from the idle stop state. In the idle stop state, the controller 60 executes a restart control. That is, if, in the idle stop state, a restart condition is satisfied (step S41: YES), the controller 60 executes a control for driving the rotating electrical machine 20 in the forward rotation direction (step S42). That is, the controller 60 controls the switching devices 611 to 616 of the inverter 61 in the forward rotation pattern to make electric power be supplied from the battery 4 to the rotating electrical machine 20. Rotation of the crankshaft 15 in the forward rotation direction is thereby begun.

When the rotation of the crankshaft 15 is begun, the detection signals are generated from the electromagnetic pickup 50. The controller 60 performs waveform shaping of the detection signals to obtain crank pulses. The controller 60 performs on/off control of the switching devices 611 to 616 in the forward rotation pattern at the timing defined based on the crank pulses and thereby drives the rotating electrical machine 20 in the forward rotation direction.

Also, when the restart condition is met (step S41: YES), the controller 60 begins drive of the fuel pump 80 (step S43) without waiting for the generation of crank pulses and prepares for early fuel injection. That is, when the restart condition is satisfied, the controller 60 begins drive of the fuel pump 80 without waiting for the beginning of rotation of the crankshaft 15.

The restart condition includes, for example, that the throttle opening degree, detected by the throttle position sensor 82, has become not less than a predetermined opening degree. In this case, the restart condition is that the user performs pivoting operation of not less than a predetermined angle of the accelerator operating member 8. The user's intention for restarting is thus detected through such operation on the accelerator operating member 8. The restart condition may include that that starter switch 70 is operated. When the starter switch 70 is operated in the idle stop state, therefore, the control for restarting the engine 10 is initiated.

Even if the phase currents are applied to the stator windings W through the inverter 61, the rotation of the crankshaft 15 may not follow and may become desynchronized such that accurate rotation of the crankshaft 15 may be disabled. The controller 60 thus executes a forward rotation identification of identifying the beginning of rotation of the crankshaft 15 in the forward rotation direction. Specifically, the controller 60 executes a forward synchronous rotation determination for judging whether or not the crankshaft 15 is rotating in synchronization with the phase currents

(step S44). For example, the controller 60 may judge that synchronous rotation in the forward rotation direction is not being performed when a timing of the detection signals of the electromagnetic pickup 50 is deviated from an appropriate timing with respect to the on/off timing of the switching devices 611 to 616 of the inverter 61. If synchronous rotation in the forward rotation direction is not detected, the controller 60 stops the drive control of the rotating electrical machine 20 and reattempts forward rotation drive of the rotating electrical machine 20 (step S42). Forward rotation drive (step S42) is thus repeated until the crankshaft 15 rotates synchronously in the forward rotation direction.

If the crankshaft 15 rotates synchronously in the forward rotation direction (step S44: YES), the controller 60 executes a start asynchronous injection control. Specifically, the controller 60 judges whether or not a start asynchronous injection execution condition is established (step S45). Asynchronous injection refers to the injection of the fuel by the fuel injector 18 before the tentative stroke identification is made based on detection of the omitted position or the intake stroke detection.

The start asynchronous injection execution condition includes, for example, one or more among a battery voltage condition, related to the voltage of the battery 4, an engine temperature condition, which is a condition related to the temperature of the engine 10, and an asynchronous injection frequency limit condition, which is a condition related to a limit of the number of times of the asynchronous injection.

The battery voltage condition may be that the battery voltage is not less than a threshold. When the battery voltage is low, there is concern of swing back control not being performed appropriately in the immediately prior engine stop and it is thus preferable to avoid asynchronous injection. Specifically, if the battery voltage is low, there is a possibility of not being able to rotate the crankshaft 15 in reverse appropriately to the swing back position. There is also a possibility that the stop position control is insufficient.

The engine temperature condition includes that the engine temperature is not less than a lower limit temperature. If the engine temperature is excessively low, the fuel injected by the asynchronous injection may not vaporize appropriately and combustion failure may occur. The engine temperature condition may include that the engine temperature is not more than an upper limit temperature. If the engine temperature is high, auto-ignition may occur before ignition in the compression stroke. The engine temperature is detected by the engine temperature sensor 83.

The asynchronous injection frequency limit condition is a condition that limits the number of times of asynchronous injection to an upper limit frequency (for example, once). There is a possibility of asynchronous injection being repeated if it takes time for the stroke identification. In this case, fuel may be supplied excessively and plug wetting may occur to the spark plug 19. It is therefore appropriate to restrict the asynchronous injection frequency.

If the start asynchronous injection execution condition is satisfied (step S45: YES), the controller 60 responds to an immediately subsequent input of a crank pulse (step S46: YES) and makes the fuel be asynchronously injected from the fuel injector 18 (step S47). The amount of fuel injected in this case is set in accordance with rules differing from those in the case of synchronous injection. For example, two types of maps, having the throttle opening degree as a variable, are prepared, one for synchronous injection and one for asynchronous injection. In synchronous injection, the fuel injection amount is determined in accordance with the synchronous injection map, and in asynchronous injection, the fuel injection amount is determined in accordance with the asynchronous injection map.

If the start asynchronous injection execution condition is not met (step S45: NO), the asynchronous injection (step S47) is omitted.

The controller 60 monitors the crank pulses and judges whether or not the omitted position has arrived (step S48). When the omitted position arrives, the controller 60 begins the counting of the crank pulses (step S49). The position specifying processing of specifying the rotational position of the crankshaft 15 based on the count value of the crank pulses with the omitted position as the reference is then performed (step S50). Thereafter, the controller 60 constantly performs the counting of the crank pulses and the position specifying processing based on the counting.

Further, the controller 60 performs an initial explosion ignition control. That is, when, by the position specifying processing (step S50), the arrival of the ignition position (initial explosion ignition position) is detected (step S51: YES), the controller 60 makes the spark plug 19 generate a spark discharge (step S52). If asynchronous injection (step S47) has been performed, the fuel is introduced into the combustion chamber 21 and therefore combustion occurs.

The swing back position is determined in advance and therefore accurate stroke identification is made possible when the first omitted position arrives. Therefore, in the case of restart from idle stop, the tentative stroke identification based on the intake stroke detection (see step S8 of FIG. 5) may be omitted.

Thereafter, the controller 60 monitors the engine speed based on the intervals of the crank pulses and, when the engine speed reaches the complete explosion engine speed (step S53: YES), performs the stroke identification for ignition (step S54). Before the stroke identification for ignition, spark discharge by the spark plug 19 is performed once in one rotation and ignition is performed twice in one combustion cycle.

After completion of the stroke identification for ignition, the twenty four rotational positions "0" to "23," by which two rotations of the crankshaft 15 are divided into 30 degrees each, are identified accurately by the counting of the crank pulses, the fuel injection at the injection position (step S55; synchronous injection control) and the ignition at the ignition position (step S56) are repeated, and the combustion by the engine 10 is continued.

Subsequent idle stop control or ordinary stop in response to an off operation of the main switch 7, etc., is the same as in the case of FIG. 5 (steps S17 to S23).

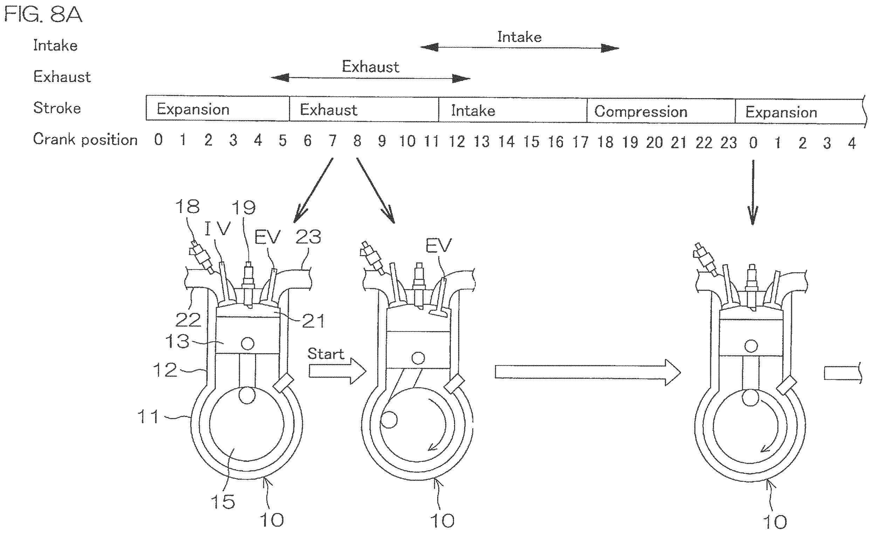

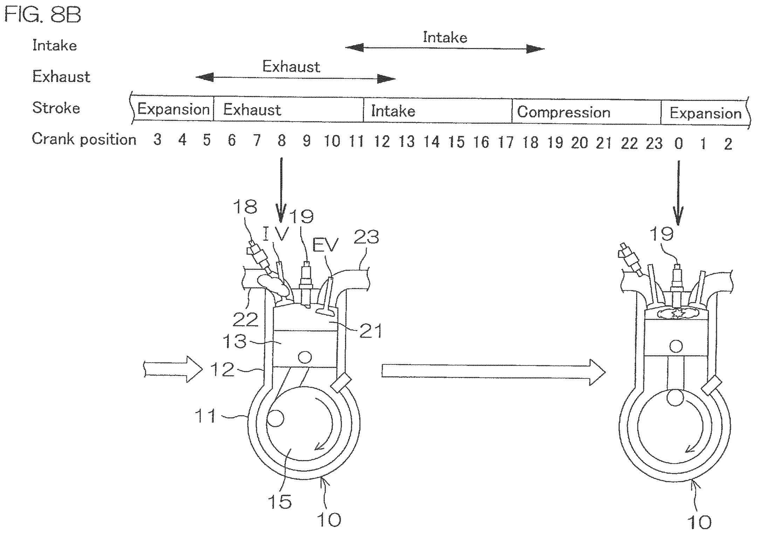

FIG. 8A and FIG. 8B are diagrams for describing an example of operations in an ordinary start. FIG. 8A and FIG. 8B illustrate an example of a series of operations and operations subsequent to the operations of FIG. 8A are shown in FIG. 8B.

The rotational position of the crankshaft 15 within a rotation section of one combustion cycle, that is, within a rotation section of 720 degrees (two rotations) is detected using the detection signals of the electromagnetic pickup 50 at the positions "0" to "23" that divide the rotation section equally into 24 parts. The positions "5" and "17" are the omitted positions (reference crank positions) and the position "0" is the ignition position set in the vicinity of the compression top dead center position. The position "12" is the position set in the vicinity of the exhaust top dead center. Before completion of the stroke identification (see step S14 of FIG. 5), ignition is performed at the position "12" in addition to the position "0."

In the present operation example, the exhaust valve EV is opened in a section of the positions "5" to "12" and the intake valve IV is opened in a section of the positions "11" to "18." For example, the position "8" is the injection position. The swing back position (target position) is a position before the ignition position "0" in the vicinity of the compression top dead center position when the crankshaft 15 is rotated in the reverse rotation direction and is, for example, the position "7." The swing back position is determined such that the compression top dead center would be the top dead center following the first omitted position (reference crank position) when the crankshaft 15 is rotated in the forward rotation direction from the swing back position. More specifically, the swing back position is preferably set between the injection position "8" and the immediately prior compression top dead center (vicinity of the position "0") and is more preferably a position closer to the injection position "8." Even more specifically, the swing back position is preferably the position "7" immediately prior to the injection position "8."

If the crankshaft 15 is at the position "7" (the swing back position), when the rotating electrical machine 20 is driven in the forward rotation direction, after the fuel injection position "8" arrives, the omitted position "17" arrives and the counting of the crank pulses begins from there. It is thus not possible to perform synchronous injection at the injection position "8" immediately after the swing back position "7." Therefore, at the ignition position "0" in the vicinity of the first compression top dead center position, the fuel is not present inside the combustion chamber 21 and combustion thus does not occur even if the spark plug 19 ignites.

When the first compression top dead center position is past and the tentative stroke identification based on the intake stroke detection ends, synchronous injection is performed at the next injection position "8." Therefore, when the spark plug 19 ignites at the ignition position "0" in the vicinity of the next compression top dead center position, combustion occurs, and the running of the engine 10 is begun.

The initial explosion thus occurs in the second combustion cycle from the swing back position "7."

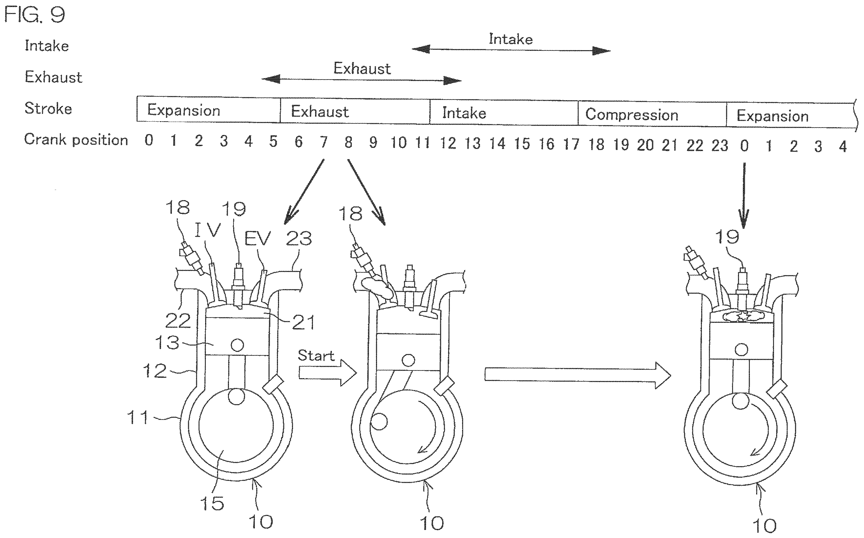

FIG. 9 is a diagram for describing an example of operations in the engine restart from the idle stop state. The time from the idle stop to the engine restart is generally not long and the rotational position of the crankshaft 15 thus does not change greatly while in the idle stop state. Therefore, in the restart, the crankshaft 15 is at or in a vicinity of the swing back position "7."

When, from this state, the rotating electrical machine 20 is driven in the forward rotation direction, the electromagnetic pickup 50 generates a detection signal and therefore a crank pulse is generated, at the latest, before the omitted position "17." Asynchronous injection is performed in response to the crank pulse. Thereafter, the omitted position "17" arrives and, from there, the counting of the crank pulses begins. Moreover, the swing back position in the restart is at or in a vicinity of the position "7" and therefore an assumption that the next omitted position is not the position "5" but is the position "17" holds. This thus enables the position "17" to be deemed to be the omitted position that is detected first and the stroke identification (specifying of the crank position) is enabled thereafter.

The controller 60 makes the spark plug 19 ignite at the ignition position "0" (initial explosion ignition position) in the vicinity of the first compression top dead center position. At this point, the fuel is already introduced into the combustion chamber by the asynchronous injection, thus enabling the initial explosion to be caused, and the running of the engine 10 begins.

Beginning of combustion from the first compression top dead center position is thus enabled and causing of the initial explosion within the first combustion cycle from the swing back position "7" is enabled. Immediate restart from the idle stop state is thereby enabled. The engine start is enabled one combustion cycle earlier in comparison to the ordinary start.

In most cases, when the rotating electrical machine 20 is driven in the forward rotation direction from the swing back position "7," the first crank pulse is generated at the position "8" (the injection position for synchronous injection) subsequent to the swing back position "7." Therefore, with the present preferred embodiment, performing of asynchronous injection is enabled at the same or substantially the same timing as synchronous injection.

As described above, with the present preferred embodiment, after the running of the engine 10 is stopped, the controller 60 executes the swing back control to rotate the crankshaft 15 in reverse to the swing back position. Securing of a run-up section, in which the crankshaft 15 is accelerated up to the compression top dead center position, in the subsequent engine start is thus enabled. Passing of the compression top dead center is thereby enabled using an inertia torque of a rotating system, including the crankshaft 15, in addition to a driving torque, generated by the rotating electrical machine 20. The rotating electrical machine 20 is thus not required to generate a large drive torque and is enabled to be made compact accordingly. In other words, performing of the engine start without hindrance is enabled while using the rotating electrical machine 20, having an electric power generating function, in common as a starter for the engine start.

On the other hand, if the restart condition is established during the idle stop, the rotating electrical machine 20 drives the crankshaft 15 in the forward rotation direction. When the drive in the forward rotation direction is begun, the controller 60 makes the asynchronous injection be performed by the fuel injector 18. Therefore, by the spark plug 19 being made to generate the spark discharge at the ignition position in the vicinity of the first compression top dead center position thereafter, the initial explosion is attained. Smooth engine start is thereby enabled.

The asynchronous injection responds not just to the input of the detection signals from the electromagnetic pickup 50 but is conditional upon the beginning of the drive of the crankshaft 15 in the forward rotation direction. The asynchronous injection would thus not be performed during the swing back operation and the fuel would not flow in reverse through an intake path because of such asynchronous injection. That is, despite the detection signals of the electromagnetic pickup 50 not having information related to the rotation direction, avoiding of undesired asynchronous injection in the swing back operation is enabled.

Thus, while being an inexpensive arrangement where the rotation information of the crankshaft 15 is acquired by the electromagnetic pickup 50 and the inverter 61 is controlled based on the output of the electromagnetic pickup 50, realization of the engine unit EU of high startability is enabled.

Further, with the present preferred embodiment, the controller 60 executes the forward rotation identification of identifying that the crankshaft 15 has begun to rotate in the forward rotation direction and, based on the forward rotation identification, performs the asynchronous injection. This enables the injection of the fuel to be avoided reliably when the crankshaft 15 is rotating in the reverse rotation direction. For example, even if the crankshaft 15 becomes angularly displaced slightly in the reverse rotation direction due to the energization of the rotating electrical machine 20, the asynchronous injection would not be executed and therefore the fuel would not flow in reverse through the intake path.

Also, with the present preferred embodiment, when the rotation of the crankshaft 15 in the forward rotation direction from the swing back position is begun, the asynchronous injection is performed before the first compression top dead center position. This enables the initial explosion to be attained reliably at the first compression top dead center position.

Further, with the present preferred embodiment, the swing back position and the first compression top dead center position are in a relationship such that the omitted position (reference crank position) is positioned between the swing back position and the first compression top dead center position. Thus, specifying of the position of the crankshaft 15 is enabled and stroke identification based on the position specifying is made possible before the first compression top dead center position is reached. This consequently enables the ignition position for the initial explosion to be specified accurately to attain the initial explosion reliably at the first compression top dead center position.

Also, with the present preferred embodiment, the swing back position is located immediately prior to the injection position for the synchronous injection. Thus, when the rotating electrical machine 20 begins to rotate the crankshaft 15 in the forward rotation direction for the restart, the first crank pulse is generated at or in the vicinity of the injection position and the asynchronous injection is performed. Injection of the fuel at the appropriate timing is therefore enabled in the asynchronous injection as well.

Further, with the present preferred embodiment, the asynchronous injection is performed in the restart from the idle stop state, thus making prompt restart possible. On the other hand, in the ordinary start that is performed by operating the starter switch 70 when not in the idle stop state, the asynchronous injection is not performed and the engine start is performed reliably by the synchronous injection.

Also, with the present preferred embodiment, the fuel injection amount in the asynchronous injection is determined based on the rule differing from that of the fuel injection amount in the synchronous injection. This enables the fuel injection amount for the asynchronous injection to be determined based on the state of the engine 10 in the restart from the idle stop state, thus enabling the startability to be improved. Also, in the ordinary running after the engine 10 is started, the synchronous injection is performed with the fuel injection amount being determined based on the different rule, thereby enabling the fuel of necessary and sufficient amount to be supplied to the engine 10.

Further, with the present preferred embodiment, the asynchronous injection is performed on condition of the establishment of the start asynchronous injection execution condition. Also, the start asynchronous injection execution condition includes at least one among the battery voltage condition, the engine temperature condition, and the asynchronous injection frequency limit condition. This enables the asynchronous injection to be performed under an appropriate condition. More specifically, the performing of the asynchronous injection to improve the startability in the restart is enabled under a condition where there is a high possibility of obtaining the initial explosion at the first compression top dead center by the asynchronous injection.

Also, with the present preferred embodiment, in the swing back control, the reverse rotation identification of the crankshaft 15 by the desynchronization determination is performed and the swing back control is interrupted when the desynchronization is occurring. Thereby, excessive electric power consumption caused by the swing back control is avoided and electric power for a subsequent start is left in the battery 4. Also, the desynchronization determination is used for the reverse rotation identification and therefore an expensive rotational position sensor is not required.

Further, with the present preferred embodiment, when the restart condition is satisfied, the drive of the fuel pump 80 is begun without waiting for the beginning of rotation of the crankshaft 15, that is, without waiting for the generation of the crank pulses. Preparation for the asynchronous injection is thereby enabled. That is, supplying of the fuel of sufficient pressure to the fuel injector 18 is enabled when the asynchronous injection is performed.

Although the preferred embodiment has been described above, the present teaching may be implemented in yet other modes.

For example, with the preferred embodiment described above, the swing back control is performed in accompaniment with the stop of running of the engine 10. However, the swing back control suffices to be performed between when the engine 10 enters the idle stop state and when the driving of the crankshaft 15 in the forward rotation direction for the restart is begun. For example, instead of performing the swing back control upon idle stop, the swing back control may be performed when the restart condition is satisfied and the crankshaft 15 may thereafter be rotated in the forward rotation direction by the rotating electrical machine 20.

Although with the preferred embodiment described above, the forward rotation identification of identifying that the crankshaft 15 has begun to rotate in the forward rotation direction is performed, this may be omitted. That is, the asynchronous injection may be performed on condition that the rotating electrical machine 20 has begun the forward rotation drive. For example, the asynchronous injection may be allowed after the rotating electrical machine 20 begins the forward rotation drive and waiting for just a fixed time is performed, and the asynchronous injection may then be executed in synchronization with an immediately subsequent crank pulse.

Further, although with the preferred embodiment described above, the asynchronous injection is not performed in the ordinary start, the same asynchronous injection as in the restart may be performed in the ordinary start.

Further, with the preferred embodiment described above, the reference detection signal is generated when the omitted position on the rotor 30 passes the electromagnetic pickup 50. However, the location of the detected portion for generating the reference detection signal is not restricted thereto. For example, one reference detection portion, differing in length in the peripheral direction of the rotor 30 from the other detected portions, may be provided.

Although with the preferred embodiment described above, the single-cylinder, four-stroke engine was taken up as an example, the present teaching may also be applied to a four-stroke engine having multiple cylinders.

Further, although with the preferred embodiment described above, the straddled vehicle having the two wheels 3a and 3b at the front and rear was taken up as an example, the present teaching may also be applied to straddled vehicles of other forms, such as a straddled vehicle having thee wheels, etc.

## Claims

1. A method for controlling an engine unit (EU) for a straddled vehicle (1), the engine unit (EU) comprises an engine (10) having a crankshaft (15) and a fuel injector (18); a rotating electrical machine (20) power-transmittably coupled to the crankshaft (15), configured to be used in common as a starter motor for rotating the crankshaft (15) and as a generator for generating electric power by a rotating force of the crankshaft (15), and including a rotor (30) that is configured to rotate together with the rotation of the crankshaft (15) and a stator (40) that faces the rotor (30), an electromagnetic pickup (50), having a detection region in a region through which a plurality of detected portions (38) pass, for generating detection signals in accompaniment with passage of the detected portions (38) through the detection region, the plurality of detected portions (38) being arranged on the rotor (30) at intervals in a rotation direction of the rotor (30); the engine unit (EU) further comprises an inverter (61) including a plurality of switching devices (611 to 616) configured to control a current flowing between a battery (4), which is installed in the straddled vehicle (1), and the rotating electrical machine (20), the method comprises executing:
a position specifying processing (S50) of specifying a position of the crankshaft (15) using the detection signals generated by the electromagnetic pickup (50),
an idle stop control (S17, S18) of stopping combustion by the engine (10) to enter an idle stop state when an idle stop condition is established,
a restart control (S41, S42) of performing, when a restart condition is established in the idle stop state, driving of the crankshaft (15) in a forward rotation direction by the rotating electrical machine (20) and actuating of the fuel injector (18) to restart the engine (10), a swing back control (S19) of performing, after the engine (10) is put in the idle stop state and before beginning the drive of the crankshaft (15) in the forward rotation direction, driving of the crankshaft (15) in a reverse rotation direction by the rotating electrical machine (20) to rotate the crankshaft (15) in reverse to a predetermined swing back position, and
a start asynchronous injection control (S44 to S47) of making, in the restart control (S41 to S43; S50 to S52), the fuel injector (18) perform asynchronous injection (S47) after beginning the drive of the crankshaft (15) in the forward rotation direction by the rotating electrical machine (20),
wherein the method comprises controlling the switching devices (611 to 616) using the detection signals generated by the electromagnetic pickup (50), and
executing, in the start asynchronous injection control (S44 to S47), a forward rotation identification (S44) of identifying a beginning of rotation of the crankshaft (15) in the forward rotation direction and making the fuel injector (18) perform the asynchronous injection (S47) on condition of the beginning of rotation of the crankshaft (15) in the forward rotation direction being identified by the forward rotation identification (S44), and the forward rotation identification (S44) includes a forward synchronous rotation determination of determining, based on the control of the switching devices (611 to 616) and the detection signals generated by the electromagnetic pickup (50), whether or not timings of the control of the switching devices (611 to 616) and the detection signals are matched.

2. The method according to claim 1, wherein the engine (10) includes a spark plug (19) configured to ignite a fuel inside the cylinder (12), the method further comprises making, in the start asynchronous injection control (S44 to S47), the fuel injector (18) perform the asynchronous injection (S47) before a compression top dead center position that comes first after the rotating electrical machine (20) begins to drive the crankshaft (15) in the forward rotation direction, and
the restart control (S41 to S43; S50 to S52) includes an initial explosion ignition control (S50 to S52) of making the spark plug (19) generate a spark discharge at an initial explosion ignition position set in a vicinity of the first compression top dead center position after the rotating electrical machine (20) begins to drive the crankshaft (15) in the forward rotation direction.

3. The method according to claim 2, wherein the plurality of detected portions (38) are arranged such that the electromagnetic pickup (50) generates a reference detection signal at a predetermined reference crank position,
the swing back position is determined such that a top dead center, following the reference crank position that comes first when the crankshaft (15) is rotated in the forward rotation direction from the swing back position, is the compression top dead center, and specifying, in the position specifying processing (S50), the initial explosion ignition position using the detection signals generated by the electromagnetic pickup (50).

4. The method according to any one of claims 1 to 3, wherein, in the start asynchronous injection control (S44 to S47), the method comprises making the fuel injector (18) perform the asynchronous injection (S47) with the detection signal, generated by the electromagnetic pickup (50) immediately after the drive of the crankshaft (15) in the forward rotation direction by the rotating electrical machine (20) begins, used as a trigger.

5. The method according to any one of claims 1 to 4, further comprising executing a stroke identification (S48 to S50; S54) of identifying the stroke of the engine (10) and a synchronous injection control (S55) of making the fuel injector (18) perform synchronous injection based on a result of the stroke identification (S48 to S50; S54), and executing the start asynchronous injection control (S44 to S47) before the result of the stroke identification (S48 to S50; S54) is obtained,

6. The method according to claim 5, further comprising determining a fuel injection amount in the asynchronous injection (S47) based on a rule differing from that of a fuel injection amount in the synchronous injection.

7. The method according to claim 5 or 6, further comprising, in an ordinary start of starting the engine (10) from a stop state other than the idle stop state, not executing the start asynchronous injection control (S44 to S47) and makes the fuel be injected from the fuel injector (18) by the synchronous injection control (S10).

8. The method according to any one of claims 5 to 7, wherein the plurality of detected portions (38) are arranged such that the electromagnetic pickup (50) generates a reference detection signal at a predetermined reference crank position,
the swing back position is determined such that a top dead center position, following the reference crank position that comes first when the crankshaft (15) is rotated in the forward rotation direction from the swing back position, is a compression top dead center position, and
in the stroke identification (S48 to S50; S54), the method comprises identifying the stroke of the engine (10) based on the reference detection signal that is first generated by the electromagnetic pickup (50) after the rotating electrical machine (20) begins the drive of the crankshaft (15) in the forward rotation direction by the restart control.

9. The method according to any one of claims 1 to 8, further comprising, in the start asynchronous injection control (S44 to S47), making the fuel injector (18) perform the asynchronous injection (S47) on condition of establishment of a start asynchronous injection execution condition, and
the start asynchronous injection execution condition includes one or more among a battery voltage condition related to a voltage of a battery (4) included in the straddled vehicle (1) and connected to the rotating electrical machine (20), an engine temperature condition which is a condition related to a temperature of the engine (10), and an asynchronous injection frequency limit condition which is a condition related to a limit of the number of times of the asynchronous injection.

10. The method according to any one of claims 1 to 9, wherein the swing back control (S19) includes a reverse rotation identification (S32) of identifying the rotation of the crankshaft (15) in the reverse rotation direction, and if the rotation of the crankshaft (15) in the reverse rotation direction is not identified by the reverse rotation identification (S32), the method comprises interrupting (S33) the swing back control.

11. The method according to claim 10, wherein the reverse rotation identification (32) includes a desynchronization determination of the rotating electrical machine (20) using the detection signals generated by the electromagnetic pickup (50).

12. The method according to any one of claims 1 to 11, the engine unit (EU) further comprises a fuel pump (80) configured to supply fuel to the fuel injector (18);
wherein the method comprises, when the restart condition is established, beginning drive of the fuel pump (80) without waiting for the beginning of rotation of the crankshaft (15).

13. An engine unit (EU) for a straddled vehicle (1) comprising the features of the engine unit as defined in one of the claims 1 to 12, and a controller (60) having a combustion controller (63) configured to control a combustion operation of the engine (10) and a rotating electrical machine controller (62) is configured to control the rotating electrical machine (20) using the detection signals generated by the electromagnetic pickup (50);
wherein the controller (60) is configured to execute the method according to at least one of the claims 1 to 12.

14. The engine unit (EU) according to claim 13, wherein the engine (10) is a single-cylinder, four-stroke engine, having one cylinder (12).

15. The engine unit (EU) according to claim 13 or 14, wherein the rotating electrical machine controller (62) is configured to control the switching devices (611 to 616).

16. A straddled vehicle (1) comprising:
the engine unit (EU) according to any one of claims 13 to 15;
a wheel (3b) to which the rotation of the crankshaft (15) is transmitted; and
a straddled seat (5).

## Patentansprüche

1. Ein Verfahren zur Steuerung einer Motor-Einheit (EU) für ein Spreiz-Sitz-Fahrzeug (1), die Motor-Einheit (EU) umfasst einen Motor (10), der eine Kurbel-Welle (15) hat, und einen Kraftstoff-Einspritzer (18); eine rotierende elektrische Maschine (20), die kraftübertragend mit der Kurbel-Welle (15) gekoppelt ist, und konfiguriert ist, um gemeinsam als Starter-Motor zum Drehen der Kurbel-Welle (15) und als Generator zum Erzeugen elektrischer Energie durch eine Drehkraft der Kurbel-Welle (15) verwendet zu werden, und die einen Rotor (30), der konfiguriert ist, um sich zusammen mit der Drehung der Kurbel-Welle (15) zu drehen, und einen Stator (40), der dem Rotor (30) zugewandt ist, einen elektromagnetischen Aufnehmer (50), der einen Detektions-Bereich in einem Bereich hat, durch den eine Mehrzahl von detektierten Abschnitten (38) hindurchgeht, zum Erzeugen von Detektions-Signalen in Begleitung des Durchgangs der detektierten Abschnitte (38) durch den Detektions-Bereich, wobei die Mehrzahl von detektierten Abschnitten (38) auf dem Rotor (30) in Intervallen in einer Drehrichtung des Rotors (30) angeordnet ist, beinhaltet; die Motor-Einheit (EU) weiterhin einen Wechselrichter (61) mit einer Mehrzahl von Schalt-Vorrichtungen (611 bis 616) umfasst, die konfiguriert sind, um einen Stromfluss zwischen einer Batterie (4), die in dem Spreiz-Sitz-Fahrzeug (1) installiert ist, und der rotierenden elektrischen Maschine (20) steuern, wobei das Verfahren umfasst ausführen:
einer Positions-Spezifikations-Verarbeitung (S50) zum Spezifizieren einer Position der Kurbel-Welle (15) unter Verwendung der Detektions-Signale, die von dem elektromagnetischen Aufnehmer (50) erzeugt sind,
einer Leerlauf-Stopp-Steuerung (S17, S18) zum Stoppen der Verbrennung durch den Motor (10), um in einen Leerlauf-Stopp-Zustand zu gelangen, wenn ein Leerlauf-Stopp-Zustand besteht,
einer Wieder-Start-Steuerung (S41, S42) zum Durchführen, wenn ein Wieder-Start-Zustand im Leerlauf-Stopp-Zustand besteht, des Antriebs der Kurbel-Welle (15) in einer Vorwärts-Dreh-Richtung durch die rotierende elektrische Maschine (20) und der Betätigung des Kraftstoff-Einspritzers (18) zum Wieder-Start des Motors (10),
einer Rück-Schwung-Steuerung (S19) zum Durchführen, nachdem der Motor (10) in den Leerlauf-Stopp-Zustand versetzt wurde und bevor der Antrieb der Kurbel-Welle (15) in Vorwärts-Dreh-Richtung beginnt, eines Antriebs der Kurbel-Welle (15) in Rückwärts-Dreh-Richtung durch die rotierende elektrische Maschine (20), um die Kurbel-Welle (15) in Rückwärts-Richtung in eine vorbestimmte Rück-Schwung-Position zu drehen, und
eine Start-Asynchron-Einspritz-Steuerung (S44 bis S47), in der, bei der Wieder-Start-Steuerung (S41 bis S43; S50 bis S52), der Kraftstoff-Einspritzer (18) eine asynchrone Einspritzung (S47) durchführt, nachdem der Antrieb der Kurbel-Welle (15) in Vorwärts-Dreh-Richtung durch die rotierende elektrische Maschine (20) begonnen hat,
wobei das Verfahren die Steuerung der Schalt-Vorrichtungen (611 bis 616) unter Verwendung der Detektions-Signale, die von dem elektromagnetischen Aufnehmer (50) erzeugt sind, umfasst, und
Ausführen, in der Start-Asynchron-Einspritz-Steuerung (S44 bis S47), einer Vorwärts-Dreh-Identifikation (S44) zum Identifizieren eines Beginns der Drehung der Kurbel-Welle (15) in Vorwärts-Dreh-Richtung und Veranlassen, dass der Kraftstoff-Einspritzer (18) die asynchrone Einspritzung (S47) unter der Bedingung durchführt,
dass der Beginn der Drehung der Kurbel-Welle (15) in Vorwärts-Dreh-Richtung durch die Vorwärts-Dreh-Identifikation (S44) identifiziert wird, und die Vorwärtsdrehungs-Identifikation (S44) beinhaltet eine vorwärts-synchrone Dreh-Bestimmung, zum Bestimmen, auf der Grundlage der Steuerung der Schalt-Vorrichtungen (611 bis 616) und der Detektions-Signale, die von dem elektromagnetischen Aufnehmer (50) erzeugt sind, ob die Zeitpunkte der Steuerung der Schalt-Vorrichtungen (611 bis 616) und der Detektions-Signale übereinstimmen oder nicht.

2. Das Verfahren gemäß Anspruch 1, wobei der Motor (10) eine Zündkerze (19) beinhaltet, die konfiguriert ist, um einen Kraftstoff im Inneren des Zylinders (12) zu zünden, wobei das Verfahren weiterhin umfasst
Bewirken, dass bei der Start-Asynchron-Einspritz-Steuerung (S44 bis S47) der Kraftstoff-Einspritzer (18) die asynchrone Einspritzung (S47) vor einer Kompressions-Oberer-Tot-Punkt-Position durchführt, der zuerst eintritt, nachdem die rotierende elektrische Maschine (20) beginnt, die Kurbel-Welle (15) in Vorwärts-Dreh-Richtung anzutreiben, und
die Wieder-Start-Steuerung (S41 bis S43; S50 bis S52) eine Initial-Explosions-Zündungs-Steuerung (S50 bis S52) beinhaltet, welche die Zündkerze (19) veranlasst, eine Funken-Entladung an einer Initial-Explosions-Zündungs-Position zu erzeugen, die in der Nähe der ersten Kompressions-Oberer-Tot-Punkt-Position, nachdem die rotierende elektrische Maschine (20) beginnt, die Kurbel-Welle (15) in Vorwärts-Dreh-Richtung anzutreiben.

3. Das Verfahren gemäß Anspruch 2, wobei die Mehrzahl der detektierten Abschnitte (38) angeordnet sind, so dass der elektromagnetische Aufnehmer (50) ein Referenz-Detektions-Signal bei einer vorbestimmten Referenz-Kurbel-Position erzeugt,
die Rückschwenk-Position bestimmt wird, so dass ein Oberer-Tot-Punkt, welcher der Referenz-Kurbel-Position folgt, die zuerst eintritt, wenn die Kurbel-Welle (15) aus der Rückschwenk-Position in Vorwärts-Dreh-Richtung gedreht wird, der Kompressions-Oberer-Tot-Punkt-Position ist, und in der Position, welche die Verarbeitung (S50) spezifiziert, die Initial-Explosions-Zündungs-Position unter Verwendung der Detektions-Signale, die von dem elektromagnetischen Aufnehmer (50) erzeugt sind, spezifiziert wird.

4. Das Verfahren gemäß irgendeinem der Ansprüche 1 bis 3, wobei, bei der Start-Asynchron-Einspritz-Steuerung (S44 bis S47), das Verfahren den Kraftstoff-Einspritzer (18) veranlasst die asynchrone Einspritzung (S47) mit dem Detektions-Signal durchführt, das von dem elektromagnetischen Aufnehmer (50) unmittelbar nach Beginn des Antriebs der Kurbel-Welle (15) in Vorwärts-Dreh-Richtung durch die rotierende elektrische Maschine (20) erzeugt, das als Auslöser verwendet wird.

5. Das Verfahren gemäß irgendeinem der Ansprüche 1 bis 4, das ferner die Ausführung einer Hub-Identifizierung (S48 bis S50; S54) zur Identifizierung des Hubs des Motors (10) und einer Synchron-Einspritz-Steuerung (S55) umfasst, die den Kraftstoff-Einspritzer (18) veranlasst, eine synchrone Einspritzung auf der Grundlage eines Ergebnisses der Hub-Identifizierung (S48 bis S50; S54) durchzuführen, und Ausführung der Start-Asynchron-Einspritz-Steuerung (S44 bis S47), bevor das Ergebnis der Hub-Identifizierung (S48 bis S50; S54) erhalten wird.

6. Das Verfahren gemäß Anspruch 5, weiterhin umfassend die Bestimmung einer Kraftstoff-Einspritz-Menge bei der asynchronen Einspritzung (S47) auf der Grundlage einer Regel, die sich von der einer Kraftstoff-Einspritz-Menge bei der synchronen Einspritzung unterscheidet.

7. Das Verfahren gemäß Anspruch 5 oder 6, weiterhin umfassend, dass bei einem gewöhnlichen Start des Motors (10) aus einem anderen Stopp-Zustand als dem Leerlauf-Stopp-Zustand die asynchrone Start-Einspritz-Steuerung (S44 bis S47) nicht ausgeführt wird und der Kraftstoff von dem Kraftstoff-Einspritzer (18) durch die synchrone Einspritz-Steuerung (S10) eingespritzt wird.

8. Das Verfahren gemäß irgendeinem der Ansprüche 5 bis 7, bei dem die Mehrzahl der detektierten Abschnitte (38) angeordnet sind, so dass der elektromagnetische Aufnehmer (50) ein Referenz-Detektions-Signal bei einer vorbestimmten Referenz-Kurbel-Position erzeugt,
die Rückschwenk-Position bestimmt wird, so dass eine Obere-Tot-Punkt-Position, die der Referenz-Kurbel-Position folgt, die zuerst eintritt, wenn die Kurbel-Welle (15) aus der Rückschwenk-Position in Vorwärts-Dreh-Richtung gedreht wird, eine Kompressions-Oberer-Tot-Punkt-Position ist, und
bei der Hub-Identifizierung (S48 bis S50; S54) umfasst das Verfahren das Identifizieren des Hubs des Motors (10) auf der Grundlage des Referenz-Detektions-Signals, das zuerst durch den elektromagnetischen Aufnehmer (50) erzeugt wird, nachdem die rotierende elektrische Maschine (20) den Antrieb der Kurbel-Welle (15) in Vorwärts-Dreh-Richtung durch die Wieder-Start-Steuerung beginnt.

9. Das Verfahren gemäß irgendeinem der Ansprüche 1 bis 8, das ferner umfasst, dass bei der Start-Asynchron-Einspritz-Steuerung (S44 bis S47) der Kraftstoff-Einspritzer (18) veranlasst wird, die asynchrone Einspritzung (S47) unter der Bedingung der Herstellung einer Start-Asynchron-Einspritz-Steuerung-Ausführungs-Bedingung durchzuführen, und
die Start-Asynchron-Einspritz-Steuerung-Ausführungs-Bedingung enthält eine oder mehrere der folgenden Bedingungen
einen Batterie-Spannungs-Zustand, der sich auf eine Spannung einer Batterie (4) bezieht, die in dem Spreiz-Sitz-Fahrzeug (1) enthalten ist und mit der rotierenden elektrischen Maschine (20) verbunden ist, einen Motor-Temperatur-Zustand, der ein Zustand ist, der sich auf eine Temperatur des Motors (10) bezieht, und einen Asynchron-Einspritz-Frequenz-Grenz-Zustand, der ein Zustand ist, der sich auf eine Begrenzung der Anzahl von Malen der asynchronen Einspritzung bezieht.

10. Das Verfahren gemäß irgendeinem der Ansprüche 1 bis 9, wobei die Rück-Schwung-Steuerung (S19) eine Rück-Dreh-Identifikation (S32) zum Identifizieren der Drehung der Kurbel-Welle (15) in der Rückwärts-Dreh-Richtung umfasst, und wenn die Drehung der Kurbel-Welle (15) in der Rückwärts-Dreh-Richtung nicht durch die Rück-Dreh-Identifikation (S32) identifiziert wird, umfasst das Verfahren das Unterbrechen (S33) der Rück-Schwung-Steuerung.

11. Das Verfahren gemäß Anspruch 10, wobei die Rück-Dreh-Identifikation (32) eine Desynchronisations-Bestimmung der rotierenden elektrischen Maschine (20) unter Verwendung der Detektions-Signale, die von dem elektromagnetischen Aufnehmer (50) erzeugt sind, umfasst.

12. Das Verfahren gemäß irgendeinem der Ansprüche 1 bis 11, die Motor-Einheit (EU) umfasst weiterhin eine Kraftstoff-Pumpe (80), die konfiguriert ist, um dem Kraftstoff-Einspritzer (18) Kraftstoff zuzuführen;
wobei das Verfahren umfasst, wenn der Wieder-Start-Zustand besteht, Beginnen des Antriebs der Kraftstoff-Pumpe (80), ohne auf den Beginn der Drehung der Kurbel-Welle (15) zu warten.

13. Eine Motor-Einheit (EU) für ein Spreitz-Sitz-Fahrzeug (1), welche die Merkmale der Motor-Einheit, wie in einem der Ansprüche 1 bis 12 definiert, umfasst, und eine Steuerung (60), die eine Verbrennungs-Steuerung (63) hat, die konfiguriert ist, so dass sie einen Verbrennungsbetrieb des Motors (10) steuert, und eine rotierende elektrische Maschine-Steuerung (62) hat, die konfiguriert ist, um die rotierende elektrische Maschine (20) unter Verwendung der Detektions-Signale zu steueren, die von dem elektromagnetischen Aufnehmer (50) erzeugt werden;
wobei die Steuerung (60) konfiguriert ist, um das Verfahren gemäß mindestens einem der Ansprüche 1 bis 12 auszuführen.

14. Die Motor-Einheit (EU) gemäß Anspruch 13, wobei der Motor (10) ein Ein-Zylinder-Viertakt-Motor ist, der einen Zylinder (12) hat.

15. Die Motor-Einheit (EU) gemäß Anspruch 13 oder 14, wobei die rotierende elektrische Maschine-Steuerung (62) konfiguriert ist, um die Schalt-Vorrichtungen (611 bis 616) zu steuern.

16. Ein Spreiz-Sitz-Fahrzeug (1), das umfasst:
die Motor-Einheit (EU) gemäß irgendeinem der Ansprüche 13 bis 15;
ein Rad (3b), auf das die Drehung der Kurbel-Welle (15) übertragen ist; und
einen Spreiz-Sitz (5).

## Revendications

1. Procédé de commande d'une unité de moteur (EU) pour un véhicule à enfourcher (1), l'unité de moteur (EU) comprend un moteur (10) présentant un vilebrequin (15) et un injecteur de carburant (18) ;
une machine électrique rotative (20) couplée par transmission de puissance au vilebrequin (15), configurée pour être utilisée en commun comme un démarreur pour faire tourner le vilebrequin (15) et comme un générateur pour générer de l'énergie électrique par une force de rotation du vilebrequin (15), et comprenant un rotor (30) qui est configuré pour tourner en même temps que la rotation du vilebrequin (15) et un stator (40) qui fait face au rotor (30), un capteur électromagnétique (50), présentant une zone de détection dans une région à travers laquelle une pluralité de parties détectées (38) passent, pour générer des signaux de détection en accompagnement du passage des parties détectées (38) à travers la zone de détection, la pluralité de parties détectées (38) étant disposée sur le rotor (30) à intervalles dans un sens de rotation du rotor (30); l'unité de moteur (EU) comprend en outre un onduleur (61) comprenant une pluralité de dispositifs de commutation (611 à 616) configurés pour commander un courant circulant entre une batterie (4), qui est installée dans le véhicule à enfourcher (1), et la machine électrique rotative (20), le procédé comprend l'exécution des opérations suivantes:
un traitement de spécification de position (S50) consistant à spécifier une position du vilebrequin (15) en utilisant les signaux de détection générés par le capteur électromagnétique (50),
une commande d'arrêt au ralenti (S17, S18) permettant d'arrêter la combustion par le moteur (10) pour passer en état d'arrêt au ralenti lorsqu'une condition d'arrêt au ralenti est établie,
une commande de redémarrage (S41, S42) consistant à exécuter, lorsqu'une condition de redémarrage est établie à l'état d'arrêt au ralenti, l'entraînement du vilebrequin (15) dans un sens de rotation vers l'avant par la machine électrique rotative (20) et l'actionnement de l'injecteur de carburant (18) pour redémarrer le moteur (10), une commande de retour en arrière (S19) consistant à exécuter, après que le moteur (10) ait été mis à l'arrêt au ralenti et avant de commencer l'entraînement du vilebrequin (15) dans le sens de rotation avant, l'entraînement du vilebrequin (15) dans le sens de rotation arrière par la machine électrique rotative (20) pour faire tourner le vilebrequin (15) en sens inverse jusqu'à une position de retour prédéterminée, et
une commande d'injection asynchrone de démarrage (S44 à S47) de faire, dans la commande de redémarrage (S41 à S43; S50 à S52), l'injecteur de carburant (18) effectuer l'injection asynchrone (S47) après le démarrage de l'entraînement du vilebrequin (15) dans le sens de rotation avant par la machine électrique rotative (20),
dans lequel le procédé comprend la commande des dispositifs de commutation (611 à 616) en utilisant les signaux de détection générés par le capteur électromagnétique (50), et
dans la commande d'injection asynchrone de démarrage (S44 à S47), une identification de rotation avant (S44) consistant à identifier un début de rotation du vilebrequin (15) dans le sens de rotation avant et à faire effectuer l'injection asynchrone (S47) par l'injecteur de carburant (18) à condition que le début de rotation du vilebrequin (15) dans le sens de rotation avant soit identifié par l'identification de rotation avant (S44), et l'identification de la rotation avant (S44) comprend une détermination de la rotation synchrone avant qui consiste à déterminer, sur la base de la commande des dispositifs de commutation (611 à 616) et des signaux de détection générés par le capteur électromagnétique (50), si les temporisations de la commande des dispositifs de commutation (611 à 616) et des signaux de détection sont adaptées ou non.

2. Procédé selon la revendication 1, dans lequel le moteur (10) comprend une bougie d'allumage (19) configurée pour allumer un carburant à l'intérieur du cylindre (12), le procédé comprend en outre le fait de faire, dans la commande d'injection asynchrone de démarrage (S44 à S47), que l'injecteur de carburant (18) effectue l'injection asynchrone (S47) avant une position de point mort haut de compression qui vient en premier après que la machine électrique rotative (20) commence à entraîner le vilebrequin (15) dans le sens de rotation avant, et
la commande de redémarrage (S41 à S43; S50 à S52) comprend une commande d'allumage par explosion initiale (S50 à S52) consistant à faire en sorte que la bougie d'allumage (19) produise une décharge d'étincelles à une position d'allumage par explosion initiale fixée à proximité de la première position de point mort haut de compression après que la machine électrique rotative (20) commence à entraîner le vilebrequin (15) dans le sens de la rotation vers l'avant.

3. Procédé selon la revendication 2, dans lequel la pluralité de parties détectées (38) sont disposées de telle sorte que le capteur électromagnétique (50) génère un signal de détection de référence à une position de manivelle de référence prédéterminée,
la position de retour est déterminée de telle sorte qu'un point mort haut, suivant la position de manivelle de référence qui vient en premier lorsque le vilebrequin (15) est tourné dans le sens de rotation avant à partir de la position de retour, est le point mort haut de compression, et en spécifiant, dans le traitement de spécification de position (S50), la position d'allumage d'explosion initiale en utilisant les signaux de détection générés par le capteur électromagnétique (50).

4. Procédé selon l'une quelconque des revendications 1 à 3, dans lequel, dans la commande d'injection asynchrone de démarrage (S44 à S47), le procédé consiste à faire effectuer à l'injecteur de carburant (18) l'injection asynchrone (S47) avec le signal de détection, généré par le capteur électromagnétique (50) immédiatement après le début de l'entraînement du vilebrequin (15) dans le sens de rotation avant par la machine électrique rotative (20), utilisé comme déclencheur.

5. Procédé selon l'une quelconque des revendications 1 à 4, comprenant en outre l'exécution d'une identification de course (S48 à S50; S54) pour identifier la course du moteur (10) et une commande d'injection synchrone (S55) pour faire effectuer à l'injecteur de carburant (18) une injection synchrone sur la base d'un résultat de l'identification de course (S48 à S50 ; S54), et l'exécution de la commande d'injection asynchrone de démarrage (S44 à S47) avant que le résultat de l'identification de course (S48 à S50 ; S54) ne soit obtenu.

6. Procédé selon la revendication 5, comprenant en outre la détermination d'une quantité d'injection de carburant dans l'injection asynchrone (S47) basée sur une règle différente de celle d'une quantité d'injection de carburant dans l'injection synchrone.

7. Procédé selon les revendications 5 ou 6, comprenant en outre, dans un démarrage ordinaire du moteur (10) à partir d'un état d'arrêt autre que l'état d'arrêt au ralenti, la non-exécution de la commande d'injection asynchrone de démarrage (S44 à S47) et l'injection du carburant à partir de l'injecteur de carburant (18) par la commande d'injection synchrone (S10).

8. Procédé selon l'une quelconque des revendications 5 à 7, dans lequel la pluralité de parties détectées (38) sont disposées de telle sorte que le capteur électromagnétique (50) génère un signal de détection de référence à une position de manivelle de référence prédéterminée, la position de retour est déterminée de telle sorte qu'une position de point mort haut, suivant la position de manivelle de référence qui vient en premier lorsque le vilebrequin (15) est tourné dans le sens de rotation avant à partir de la position de retour, est une position de point mort haut de compression, et dans l'identification de la course (S48 à S50; S54), la méthode comprend l'identification de la course du moteur (10) fondée sur le signal de détection de référence qui est d'abord généré par le capteur électromagnétique (50) après que la machine électrique rotative (20) commence l'entraînement du vilebrequin (15) dans le sens de rotation avant par la commande de redémarrage.

9. Procédé selon l'une quelconque des revendications 1 à 8, comprenant en outre, dans la commande d'injection asynchrone de démarrage (S44 à S47), le fait de faire effectuer l'injection asynchrone (S47) par l'injecteur de carburant (18) à condition d'établir une condition d'exécution d'injection asynchrone de démarrage, et
la condition d'exécution de l'injection asynchrone de démarrage comprend une ou plusieurs parmi une condition de tension de batterie liée à une tension d'une batterie (4) incluse dans le véhicule à enfourcher (1) et connectée à la machine électrique rotative (20), une condition de température du moteur qui est une condition liée à une température du moteur (10), et une condition de limite de fréquence d'injection asynchrone qui est une condition liée à une limite du nombre de fois de l'injection asynchrone.

10. Procédé selon l'une quelconque des revendications 1 à 9, dans lequel la commande de retour en arrière (S19) comprend une identification de rotation inverse (S32) pour identifier la rotation du vilebrequin (15) dans le sens de rotation inverse, et si la rotation du vilebrequin (15) dans le sens de rotation inverse n'est pas identifiée par l'identification de rotation inverse (S32), le procédé comprend l'interruption (S33) de la commande de retour en arrière.

11. Procédé selon la revendication 10, dans laquelle l'identification de la rotation inverse (32) comprend une détermination de la désynchronisation de la machine électrique en rotation (20) en utilisant les signaux de détection générés par le capteur électromagnétique (50).

12. Procédé selon l'une des revendications 1 à 11, l'unité moteur (UE) comprend en outre une pompe à carburant (80) configurée pour fournir du carburant à l'injecteur de carburant (18) ;
dans lequel le procédé comprend, lorsque la condition de redémarrage est établie, le démarrage de l'entraînement de la pompe à carburant (80) sans attendre le début de la rotation du vilebrequin (15).

13. Unité de moteur (UE) pour un véhicule à enfourcher (1) comprenant les caractéristiques de l'unité de moteur telles que définies dans l'une des revendications 1 à 12, et un contrôleur (60) présentant un contrôleur de combustion (63) configuré pour commander une opération de combustion du moteur (10) et un contrôleur de machine électrique rotative (62) est configuré pour commander la machine électrique rotative (20) en utilisant les signaux de détection générés par le capteur électromagnétique (50) ;
dans laquelle le contrôleur (60) est configuré pour exécuter le procédé selon au moins une des revendications 1 à 12.

14. Unité moteur (UE) selon la revendication 13, dans laquelle le moteur (10) est un moteur à quatre temps, monocylindre, présentant un cylindre (12).

15. Unité moteur (UE) selon les revendications 13 ou 14, dans laquelle le dispositif de commande de la machine électrique rotative (62) est configuré pour commander les dispositifs de commutation (611 à 616).

16. Véhicule à enfourcher (1) comprenant:
l'unité moteur (UE) selon l'une des revendications 13 à 15;
une roue (3b) à laquelle est transmise la rotation du vilebrequin (15); et
un siège à enfourcher (5).
